# EUROPEAN PATENT APPLICATION

(11) **EP 4 507 443 A1**
(43) Date of publication of application: **12.02.2025**
(21) Application number: 23791313.2
(22) Date of filing: 20.04.2023
(51) Int. Cl.: H04W 76/00

(54) **METHOD FOR COMMUNICATION ACROSS DISTRIBUTED UNITS (DUS), AND RELATED APPARATUS**

(30) Priority: 22.04.2022 CN 202210428325
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN); GU, Zhifang, Shenzhen, Guangdong 518129 (CN); LOU, Chong, Shenzhen, Guangdong 518129 (CN)
(74) Representative: Epping - Hermann - Fischer
(86) International application number: PCT/CN2023/089453
(87) International publication number: WO 2023/202660

(57) **Abstract**

An inter-distributed-unit (distributed unit, DU) communication method and a related apparatus are provided. The method includes: A first DU receives data of a terminal from a central unit (central unit, CU). The first DU processes the data by using a media access control (media access control, MAC) entity scheduling function specific to the terminal, to obtain a physical layer transmission data stream. The first DU sends the physical layer transmission data stream to a second DU. In the method provided in this application, because a MAC entity of the first DU is used to uniformly schedule the physical layer transmission data stream, the first DU and the second DU do not need to exchange a large amount of layer 2 (layer 2, L2) parameter information, so that information transmission overheads can be reduced.

## Description

This application claims priority to Chinese Patent Application No. 202210428325.4, filed with the China National Intellectual Property Administration on April 22, 2022 and entitled "INTER-DISTRIBUTED-UNIT DU COMMUNICATION METHOD AND RELATED APPARATUS", which is incorporated herein by reference in its entirety.

### TECHNICAL FIELD

Embodiments of this application relate to the wireless communication field, and in particular, to an inter-distributed-unit DU communication method and a related apparatus.

### BACKGROUND

Release 16, which is a 5th generation mobile communication technology (5th generation mobile communication technology, 5G) new radio (new radio, NR) standard and released by the 3rd generation partnership project (third generation partnership project, 3GPP) introduces a central unit (central unit, CU) and distributed unit (distributed unit, DU) split architecture into a 5G gNodeB (gNodeB, gNB). In other words, the gNB includes one gNB-CU and one or more gNB-DUs. Based on this split architecture, functions for high delay requirements, for example, scheduling and fast retransmission, are implemented in the DU, and functions for low delay requirements are implemented in the CU in a centralized manner. Currently, the 3GPP is discussing standardization work of inter-base station coordination (inter-gNB/gNB-DU coordination), where a coordinating base station may be a logical gNB-DU entity, and inter-base station coordination may be applied to application scenarios including carrier aggregation (carrier aggregation, CA) and multi-TRP (Transmission Reception Point, transmission reception point) transmission.

The purpose of introducing CA into 5G is to meet a requirement for a high data transmission rate in some application scenarios (for example, enhanced mobile broadband (enhanced mobile broadband, eMBB)). The principle of CA is to aggregate bandwidths of a plurality of cells for a same user equipment (user equipment, UE) to use, the UE can use a sum of bandwidths of a plurality of carriers after aggregating the plurality of component carriers (component carriers, CCs), and a peak rate of the UE can be increased almost proportionally. Carrier aggregation may be applied in a scenario including cells corresponding to a plurality of DUs. In this application scenario, a master DU (master-DU, mDU) steers, to a secondary DU (secondary DU, sDU), service data units (Service Data Unit, SDU) or data packets that arrive at a radio link control (radio link control, RLC) layer or a media access control (media access control, MAC) layer.

The purpose of introducing TRP into 5G is to reduce impact on propagation of gNB high-frequency signal blocked by obstacles. In a high frequency scenario, a plurality of physically separated antennas or a plurality of antenna panels on a same antenna are used to form different spatial channels, in other words, a plurality of TRPs are used to form a multi-TRP, to form a maximum beamforming gain or a reliability gain of spatial diversity by utilizing the characteristic of non-correlation between the spatial channels, to provide better downlink transmission coverage, better reliability, or a better data rate.

The TRPs may be deployed on different DUs to form inter-DU multi-TRP transmission, and controlled by a physical layer entity and a MAC layer entity. In a current inter-DU coordination transmission manner, different DUs each need to configure a separate RLC entity or MAC entity for the UE. Moreover, a large amount of layer 2 (the layer 2 may include the RLC layer and the MAC layer) parameter information is to be exchanged among coordinating DUs, for example, layer 2 contexts (context), configurations, and intermediate state variables (intermediate state variables). For example, the intermediate state variables include timers (timers), a correspondence between a hybrid automatic repeat request (hybrid automatic repeat request, HARQ) process and a PDCP entity, an RLC entity, or an upper layer entity, and data transmission variables of HARQ processes. The data transmission variables of the HARQ processes include parameters such as a data packet acknowledgment state, a maximum sending or receiving state variable, a sending or receiving state variable, and a transmission window. It can be learned that existing architecture configures are complex, and information transmission overheads are high.

### SUMMARY

Embodiments of this application provide an inter-distributed-unit DU communication method and a related apparatus, to reduce information transmission overheads in an inter-DU transmission system.

According to a first aspect, this application provides an inter-distributed-unit DU communication method. The method includes: A first DU receives data of a terminal from a central unit CU. The first DU processes the data by using a media access control MAC entity scheduling function specific to the terminal, to obtain a physical layer transmission data stream. The first DU sends the physical layer transmission data stream to a second DU. According to the method, because a MAC entity of the first DU is used to uniformly schedule the physical layer transmission data stream, the first DU and the second DU do not need to exchange a large amount of layer 2 parameter information, so that information transmission overheads can be reduced.

With reference to the first aspect, in a possible implementation, the physical layer transmission data stream is a media access control protocol data unit MAC PDU. In this manner, the first DU processes the data by using the MAC entity scheduling function specific to the terminal, and processed data is encapsulated into the MAC PDU.

With reference to the first aspect, in a possible implementation, that the first DU processes the data by using a media access control MAC entity scheduling function specific to the terminal, to obtain a physical layer transmission data stream includes: The first DU processes the data by using the media access control MAC entity scheduling function and a physical layer scheduling function that are for the terminal, to obtain the physical layer transmission data stream, where the physical layer transmission data stream is one of the following: a transport block TB, a codeword CW, and a code block CB.

Optionally, the physical layer transmission data stream may alternatively be a baseband modulation symbol generated by modulating different CWs, or may be an orthogonal frequency division multiplexing (orthogonal frequency division multiplexing, OFDM) symbol generated by combining modulation symbols to perform layer mapping and precoding/weighting, and then mapping the modulation symbols to a radio resource element (resource element, RE) block.

With reference to the first aspect, in a possible implementation, the method further includes: The first DU sends physical layer transmission control information to the second DU, where the physical layer transmission control information includes one or more of the following: related parameter information of downlink control information DCI, related parameter information of the TB, CB or CW, parameter information of a modulation and coding scheme MCS, parameter information of transmit power control TPC, status parameter information of a transmission configuration indicator TCI, parameter information of a precoding matrix indication PMI, parameter information of an antenna port, related parameter information of a time-frequency location and a search space Searchspace that are of a physical downlink control channel PDCCH for the terminal in a control resource set CORESET, information about a data scrambling identifier of a physical downlink shared channel PDSCH, and information about a radio network temporary identifier RNTI. According to this method, the second DU can determine a manner of sending the physical layer transmission data stream to the terminal.

With reference to the first aspect, in a possible implementation, the method further includes: The first DU receives uplink control information UCI from the second DU, where the UCI includes one or more of the following: a buffer status report BSR, a power headroom report PHR, a timing advance TA, and a measurement reference signal measurement result.

With reference to the first aspect, in a possible implementation, the method further includes: The first DU receives uplink feedback information from the second DU, where the uplink feedback information includes hybrid automatic repeat request HARQ receiving state feedback information. With reference to the first aspect, in a possible implementation, the method further includes: The first DU receives indication information from the CU, where the indication information includes an identifier of the terminal, and the indication information indicates the first DU and the second DU to perform inter-DU coordination transmission for the terminal. Optionally, the CU sends the indication information to the first DU and the second DU through an F1 interface.

According to a second aspect, this application provides an inter-distributed-unit DU communication method. The method includes: A second DU receives a physical layer transmission data stream from a first DU. The second DU sends the physical layer transmission data stream to a terminal. According to the method, because a MAC entity of the first DU is used to uniformly schedule the physical layer transmission data stream, the first DU and the second DU do not need to exchange a large amount of layer 2 parameter information, so that information transmission overheads can be reduced.

With reference to the second aspect, in a possible implementation, the physical layer transmission data stream is one of the following: a media access control protocol data unit MAC PDU, a transport block TB, a codeword CW, and a code block CB.

With reference to the second aspect, in a possible implementation, the second DU forbids enabling a MAC entity scheduling function specific to the terminal. The second DU does not need to enable the MAC entity scheduling function specific to the terminal, and the first DU and the second DU do not need to exchange a large amount of layer 2 parameter information, so that the information transmission overheads can be reduced.

With reference to the second aspect, in a possible implementation, the method further includes: The second DU receives physical layer transmission control information from the first DU, where the physical layer transmission control information includes one or more of the following: related parameter information of downlink control information DCI, related parameter information of the TB, CB or CW, parameter information of a modulation and coding scheme MCS, parameter information of transmit power control TPC, status parameter information of a transmission configuration indicator TCI, parameter information of a precoding matrix indication PMI, parameter information of an antenna port, related parameter information of a time-frequency location and a search space Searchspace that are of a physical downlink control channel PDCCH for the terminal in a control resource set CORESET, information about a data scrambling identifier of a physical downlink shared channel PDSCH, and information about a radio network temporary identifier RNTI.

With reference to the second aspect, in a possible implementation, that the second DU sends the physical layer transmission data stream to a terminal includes: The second DU determines, based on the related parameter information of the time-frequency location and the Searchspace that are of the PDCCH for the terminal in the CORESET in the physical layer transmission control information, the time-frequency location of the PDCCH corresponding to the terminal. The second DU determines a time-frequency location of the PDSCH based on the related parameter information of the DCI in the physical layer transmission control information. The second DU sends, to the terminal through the PDCCH, DCI scrambled by using the RNTI, where the DCI indicates the PDSCH. The second DU sends, to the terminal through the PDSCH, the physical layer transmission data stream scrambled by using the data scrambling identifier of the PDSCH. With reference to the second aspect, in a possible implementation, the method further includes: The second DU receives uplink control information UCI from the terminal, where the UCI includes one or more of the following: a buffer status report BSR, a power headroom report PHR, a timing advance TA, and a measurement reference signal measurement result. The second DU sends the UCI to the first DU.

With reference to the second aspect, in a possible implementation, the method further includes: The second DU receives uplink feedback information from the terminal, where the uplink feedback information includes hybrid automatic repeat request HARQ receiving state feedback information. The second DU sends the uplink feedback information to the first DU.

With reference to the second aspect, in a possible implementation, the method further includes: The second DU receives indication information from a CU, where the indication information includes an identifier of the terminal, and the indication information indicates the second DU and the first DU to perform inter-DU coordination transmission for the terminal.

According to a third aspect, this application provides an inter-distributed-unit DU communication method. The method includes: A first DU receives indication information from a central unit CU, where the indication information indicates a terminal to initiate contention-free random access to a second DU. The first DU sends the indication information to the terminal. The first DU receives a random access message 1 (Msg1) from the second DU. The first DU generates a random access message 2 (Msg2) based on the Msg1. The first DU sends the Msg2 to the terminal. In the method, the terminal accesses the second DU in a contention-free random access manner, so that a success rate of accessing the second DU by the terminal can be improved.

With reference to the third aspect, in a possible implementation, the indication information indicates a dedicated preamble used for the contention-free random access, and the Msg1 includes the dedicated preamble. Alternatively, the indication information indicates a dedicated random access resource used for the contention-free random access, and that the first DU receives a Msg1 from the second DU includes: The first DU receives the Msg1 from the second DU by using the dedicated random access resource. Alternatively, the indication information indicates a dedicated preamble and a dedicated random access resource, and that the first DU receives a Msg1 from the second DU includes: The first DU receives the Msg1 from the second DU by using the dedicated random access resource, where the Msg1 includes the dedicated preamble.

According to a fourth aspect, this application provides an inter-distributed-unit DU communication method. The method includes: A second DU receives a random access message 1 (Msg1) from a terminal, where the Msg1 is generated in response to indication information, and the indication information indicates the terminal to initiate contention-free random access to the second DU. The second DU sends the Msg1 to a first DU. In the method, the terminal accesses the second DU in a contention-free random access manner, so that a success rate of accessing the second DU by the terminal can be improved.

With reference to the fourth aspect, in a possible implementation, the indication information indicates a dedicated preamble used for the contention-free random access, and the Msg1 includes the dedicated preamble. Alternatively, the indication information indicates a dedicated random access resource used for the contention-free random access, and that a second DU receives a Msg1 from a terminal includes: The second DU receives the Msg1 from the terminal by using the dedicated random access resource. Alternatively, the indication information indicates a dedicated preamble and a dedicated random access resource, and that a second DU receives a Msg1 from a terminal includes: The second DU receives the Msg1 from the terminal by using the dedicated random access resource, where the Msg1 includes the dedicated preamble.

According to a fifth aspect, this application provides an inter-distributed-unit DU communication method. The method includes: A first DU receives a random access message 1 (Msg1) from a second DU. The first DU generates a random access message 2 (Msg2) based on the Msg1. The first DU sends the Msg2 to a terminal. The first DU receives a random access message 3 Msg3 from the second DU. The first DU sends the Msg3 to a central unit CU. The first DU receives a Msg4 from the CU. The first DU sends the Msg4 to the terminal. In the method, the terminal accesses the second DU in a manner of contention-based random access.

With reference to the fifth aspect, in a possible implementation, the method further includes: The first DU receives, from the second DU, a random access radio network temporary identifier RA-RNTI value of a secondary cell, where there is a correspondence between the secondary cell and the second DU, and the RA-RNTI value is used to determine a time-frequency location of a first physical downlink control channel PDCCH for scheduling the Msg2, and a time-frequency location of a first physical downlink shared channel PDSCH for transmission of data information of the Msg2, and is used for data scrambling of the first PDCCH.

With reference to the fifth aspect, in a possible implementation, a response time window for monitoring the first PDCCH or a random access response is greater than 80 slots. In this manner, a longer response time window is configured for a process in which the terminal accesses the second DU in the manner of contention-based random access. In this way, impact of non-ideal BH between DUs can be reduced, and a success rate of accessing the second DU by the terminal can be increased.

With reference to the fifth aspect, in a possible implementation, that the first DU sends the Msg2 to a terminal includes: The first DU sends the Msg2 to the terminal via the second DU.

With reference to the fifth aspect, in a possible implementation, that the first DU sends the Msg4 to the terminal includes: The first DU sends the Msg4 to the terminal via the second DU.

With reference to the fifth aspect, in a possible implementation, maximum duration of a timer for monitoring the Msg4 is greater than duration of 64 subframes. In this manner, longer maximum duration of the timer is configured for the process in which the terminal accesses the second DU in the manner of contention-based random access. In this way, the impact of the non-ideal BH between the DUs can be reduced, and the success rate of accessing the second DU by the terminal can be increased.

According to a sixth aspect, this application provides an inter-distributed-unit DU communication method. The method includes: A second DU receives a random access message 1 (Msg1) from a terminal. The second DU sends the Msg1 to a first DU. The second DU sends a random access radio network temporary identifier (RA-RNTI) value of a secondary cell to the first DU, where there is a correspondence between the secondary cell and the second DU, and the RA-RNTI value is used to determine a time-frequency location of a first physical downlink control channel PDCCH for scheduling a random access message 2 (Msg2), and a time-frequency location of a first physical downlink shared channel PDSCH for transmission of data information of the Msg2, and is used for data scrambling of the first PDCCH. The second DU receives a random access message 3 Msg3 from the terminal. The second DU sends the Msg3 to the first DU. In the method, the terminal accesses the second DU in a manner of contention-based random access.

With reference to the sixth aspect, in a possible implementation, the method further includes: The second DU determines, based on the RA-RNTI value, the time-frequency location of the first PDCCH and the time-frequency location of the first PDSCH. The second DU receives the Msg2 from the first DU. The second DU sends first DCI to the terminal through the first PDCCH, where the first DCI is scrambled based on the RA-RNTI value, and the first DCI indicates the time-frequency location of the first PDSCH. The second DU sends the data information of the Msg2 to the terminal through the first PDSCH.

With reference to the sixth aspect, in a possible implementation, a response time window for monitoring the first PDCCH or the Msg2 is greater than 80 slots. In this manner, a longer response time window is configured for a process in which the terminal accesses the second DU in the manner of contention-based random access. In this way, impact of non-ideal BH between DUs can be reduced, and a success rate of accessing the second DU by the terminal can be increased.

With reference to the sixth aspect, in a possible implementation, the method further includes: The second DU receives a random access message 4 (Msg4) from the first DU, where a search space of a second PDCCH for scheduling the Msg4 is configured for the second DU, the second PDCCH is used for transmission of second downlink control information (DCI) for scheduling a second PDSCH, and the second PDSCH is used for transmission of data information of the Msg4. The second DU sends the second DCI to the terminal through the second PDCCH, where the second DCI is scrambled based on a temporary cell radio network temporary identifier TC-RNTI, the TC-RNTI is included in the Msg2, and the second DCI indicates the second PDSCH. The second DU sends the data information of the Msg4 to the terminal through the second PDSCH.

With reference to the sixth aspect, in a possible implementation, maximum duration of a timer for monitoring the second PDCCH or the Msg4 is greater than duration of 64 subframes. In this manner, longer maximum duration of the timer is configured for the process in which the terminal accesses the second DU in the manner of contention-based random access. In this way, the impact of the non-ideal BH between the DUs can be reduced, and the success rate of accessing the second DU by the terminal can be increased.

According to a seventh aspect, this application provides a communication apparatus. The communication apparatus includes a unit configured to perform the method in any one of the first aspect and the possible implementations of the first aspect, a unit configured to perform the method in any one of the second aspect and the possible implementations of the second aspect, a unit configured to perform the method in any one of the third aspect and the possible implementations of the third aspect, a unit configured to perform the method in any one of the fourth aspect and the possible implementations of the fourth aspect, a unit configured to perform the method in any one of the fifth aspect and the possible implementations of the fifth aspect, or a unit configured to perform the method in any one of the sixth aspect and the possible implementations of the sixth aspect.

According to an eighth aspect, this application provides a communication apparatus. The communication apparatus may be the first DU in the foregoing method designs or a chip disposed in the first DU. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the first DU in the foregoing aspects.

According to a ninth aspect, this application provides a communication apparatus. The communication apparatus may be the second DU in the foregoing method designs or a chip disposed in the second DU. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the second DU in the foregoing aspects.

The communication interface in the communication apparatus in the eighth aspect and the ninth aspect is configured to: receive a signal from another communication apparatus other than the communication apparatus and perform transmission of the signal to the processor, or send a signal from the processor to another communication apparatus other than the communication apparatus. The communication interface may be a transceiver in the communication apparatus, for example, may be implemented through an antenna, a feeder, a codec, or the like in the communication apparatus. Alternatively, if the communication apparatus is a chip disposed in a communication apparatus, the communication interface may be an input/output interface of the chip, for example, an input/output pin.

According to a tenth aspect, a computer program product is provided. The computer program product includes computer program code. When the computer program code is run, the method performed by the first DU or the second DU in the foregoing aspects is performed.

According to an eleventh aspect, this application provides a computer-readable storage medium. The computer-readable storage medium stores a computer program. When the computer program is run, the method performed by the first DU or the second DU in the foregoing aspects is implemented.

In embodiments of this application, a first DU receives data of a terminal from an upper layer, enables a MAC entity scheduling function specific to the terminal, processes the data to obtain a physical layer transmission data stream, and then sends the physical layer transmission data stream to a second DU, to form PHY layer data splitting for the terminal. Because a MAC entity of the first DU is used to uniformly schedule the physical layer transmission data stream and the second DU does not enable the MAC entity scheduling function specific to the terminal, the first DU and the second DU do not need to exchange a large amount of layer 2 parameter information, so that information transmission overheads can be reduced.

### BRIEF DESCRIPTION OF DRAWINGS

FIG. 1 is a diagram of a network architecture of a wireless communication system according to an embodiment of this application;
FIG. 2 is a diagram of an architecture of an NG-RAN according to an embodiment of this application;
FIG. 3 is a diagram of an architecture of a CP/UP split gNB according to an embodiment of this application;
FIG. 4 is a diagram of distribution of air interface protocol stacks of a gNB-CU and a gNB-DU according to an embodiment of this application;
FIG. 5 is a diagram of a control plane protocol stack in a case in which a gNB uses a CU/DU split architecture according to an embodiment of this application;
FIG. 6 is a diagram of a user plane protocol stack in a case in which a gNB uses a CU/DU split architecture according to an embodiment of this application;
FIG. 7 is a diagram of carrier aggregation according to an embodiment of this application;
FIG. 8 is a diagram of an intra-base-station CA architecture and an inter-base-station CA architecture according to an embodiment of this application;
FIG. 9 is a diagram of multi-TRP transmission according to an embodiment of this application;
FIG. 10 is a diagram of an architecture of inter-DU-cell data splitting according to an embodiment of this application;
FIG. 11 is a schematic flowchart of an inter-DU communication method according to an embodiment of this application;
FIG. 12 is a diagram of another architecture of inter-DU-cell data splitting according to an embodiment of this application;
FIG. 13 is a schematic flowchart of another inter-DU communication method according to an embodiment of this application;
FIG. 14 is a schematic flowchart of another inter-DU communication method according to an embodiment of this application;
FIG. 15 is a schematic flowchart of another inter-DU communication method according to an embodiment of this application;
FIG. 16 is a diagram of an IAB network communication system according to an embodiment of this application;
FIG. 17 is a diagram of a control plane protocol stack in an IAB network according to an embodiment of this application;
FIG. 18 is a diagram of a user plane protocol stack in an IAB network according to an embodiment of this application;
FIG. 19 is a diagram of a communication scenario according to an embodiment of this application;
FIG. 20 is a diagram of a dual connectivity communication scenario according to an embodiment of this application;
FIG. 21 is a diagram of a dual connectivity communication architecture in an IAB network according to an embodiment of this application;
FIG. 22 is a diagram of a CP-UP split scenario in an EN DC scenario according to an embodiment of this application;
FIG. 23 is a diagram of a CP-UP split scenario in an NR DC scenario according to an embodiment of this application;
FIG. 24 is a diagram of an IAB network communication system using EN DC networking according to an embodiment of this application;
FIG. 25 is a diagram of an IAB network communication system using NR DC networking according to an embodiment of this application;
FIG. 26 to FIG. 29 are schematic flowcharts of some communication methods according to embodiments of this application;
FIG. 30 is a diagram of a structure of a communication apparatus according to an embodiment of this application;
FIG. 31 is a diagram of a structure of another communication apparatus according to an embodiment of this application; and
FIG. 32 is a diagram of a structure of a chip according to an embodiment of this application.

### DESCRIPTION OF EMBODIMENTS

The following describes the technical solutions in embodiments of this application in more detail. Terms used in the following embodiments of this application are merely intended to describe specific embodiments, but are not intended to limit this application. As used in the specification and the appended claims of this application, the singular expressions "a", "one", "said", "the foregoing", "the", and "this" are intended to include also the plural expression, unless the context expressly indicates the contrary. It should also be understood that the term "and/or" used in this application means and includes any or all possible combinations of one or more listed items. The term "a plurality of" used in this application means two or more.

It should be noted that, the terms "first", "second", "third", and the like in the specification, claims, and accompanying drawings of this application are intended to distinguish between similar objects but do not necessarily indicate a specific order or sequence. It should be understood that data used in such a way are interchangeable in proper circumstances so that embodiments of this application described herein can be implemented in an order other than the order illustrated or described herein. In addition, the term "include" and any variants thereof mean to cover the non-exclusive inclusion, for example, a process, method, system, product, or server that includes a list of steps or units is not necessarily limited to those steps or units that are expressly listed, but may include other steps or units not expressly listed or are inherent to the process, method, product, or device.

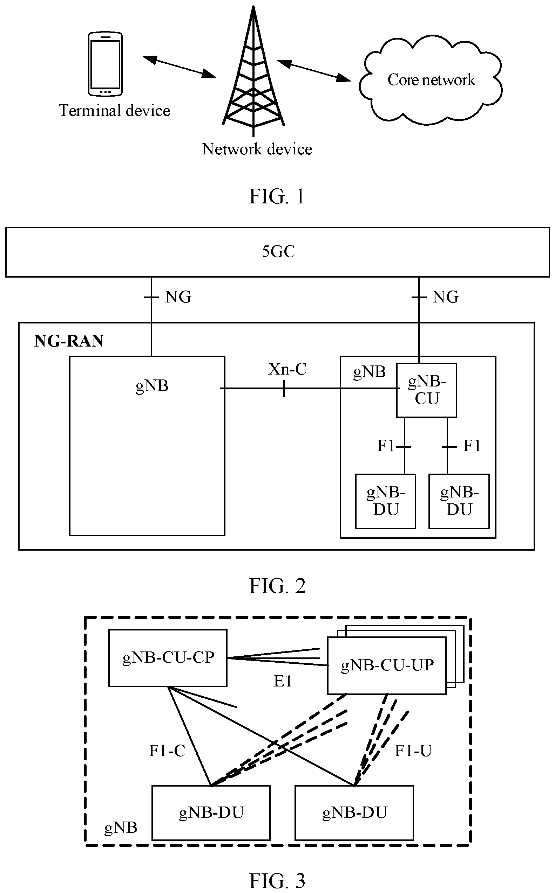

Embodiments of this application may be applied to a network architecture shown in FIG. 1. The network architecture shown in FIG. 1 is a network architecture of a wireless communication system. The network architecture usually includes a terminal device, a network device and a core network (core network, CN) device. Quantities and forms of the devices constitute no limitation on embodiments of this application. The terminal device is connected to the network device (or referred to as a radio access network device or an access network (access network, AN) device) in a wireless manner, and the network device is connected to a core network in a wireless or wired manner. The core network device and the radio access network device may be different independent physical devices. Alternatively, a function of the core network device and a logical function of the radio access network device may be integrated into a same physical device (the physical device may be referred to as a network device). Alternatively, some functions of the core network device and some functions of the radio access network device may be integrated into one physical device. FIG. 1 is merely a diagram. The communication system may further include another network device, for example, may further include a wireless relay device and a wireless backhaul device, which are not shown in FIG. 1.

It should be noted that the wireless communication system mentioned in embodiments of this application includes but is not limited to: an internet of things (internet of things, IoT) system, a long term evolution (long term evolution, LTE) system, a 5th generation (5th-generation, 5G) mobile communication system, a 6th generation (6th-generation, 6G) mobile communication system, and a future mobile communication system. In some embodiments, the technical solutions in embodiments of this application may be further applied to a wireless local area network (Wireless Local Area Network, WLAN), may be further applied to a vehicle-to-everything (Vehicle-to-X, V2X) network, may be further applied to a non-terrestrial network (non-terrestrial network, NTN), satellites and high-altitude platforms (High-Altitude Platforms, HAPs), an enhanced internet of things, and may be further applied to another network. In some other embodiments, the technical solutions in embodiments of this application may be further applied to a communication-radar integrated communication system, a terahertz communication system, a communication system with a higher frequency, and the like. This is not specifically limited in this application.

The network device in embodiments of this application may be a base station (Base Station, BS). The base station may provide communication services for a plurality of terminal devices, or a plurality of base stations may provide communication services for a same terminal device. In embodiments of this application, the base station is an apparatus deployed in a radio access network to provide a wireless communication function for a terminal device. A base station device may be a base station, a relay station, or an access point. The base station may be an eNB or eNodeB (Evolved NodeB) in long term evolution (Long Term Evolution, LTE). The base station may be a gNB (gNodeB) in a 5G network, or may be a radio controller in a cloud radio access network (Cloud Radio Access Network, CRAN) scenario. The base station may alternatively be a base station in a future 6G network or a network device in a future evolved PLMN network. The base station may alternatively be a wearable device, a vehicle-mounted device, or the like. In embodiments of this application, an apparatus configured to implement a function of a network device may be the network device, or may be an apparatus that can support the network device in implementing the function, for example, a chip system. The apparatus may be installed in the network device.

In embodiments of this application, the base station may use a central unit (central unit, CU) and distributed unit (distributed unit, DU) split architecture. In other words, the gNB includes one gNB-CU and one or more gNB-DUs. A starting point of CU/DU splitting is that functions having a high delay requirement, for example, scheduling and fast retransmission, can be implemented in a DU, and functions having a low delay requirement can be implemented in a CU. Another advantage of the CU/DU splitting is that all external interfaces of the gNB, such as Xn (namely, an interface between neighboring gNBs), are in the CU, so that additional complexity of an external interface of each DU is avoided. In addition, the CU/DU splitting supports centralized processing of PDCP. This not only facilitates end to end safety protection of communication between a UE and the CU, but also facilitates data packet processing in a dual connectivity scenario and a handover scenario. This is because traffic passing through different DUs is separated on the CU.

FIG. 2 is a diagram of an architecture of a next generation radio access network (NG-RAN) according to an embodiment of this application. As shown in FIG. 2, the NG-RAN includes a plurality of gNBs connected to a 5GC. In the NG-RAN, there may be a complete gNB, or there may be a gNB including a gNB-CU and a gNB-DU. Specifically, the gNBs are connected through Xn, the gNB-CU and the gNB-DU are connected through an F1 interface, and the gNB-CU and the 5GC are connected through an NG interface. One gNB-DU can be connected to only one gNB-CU, and one gNB-CU may be connected to a plurality of gNB-DUs. It should be noted that a gNB-CU and gNB-DUs connected to the gNB-CU are considered as one gNB for other gNBs and the 5GC.

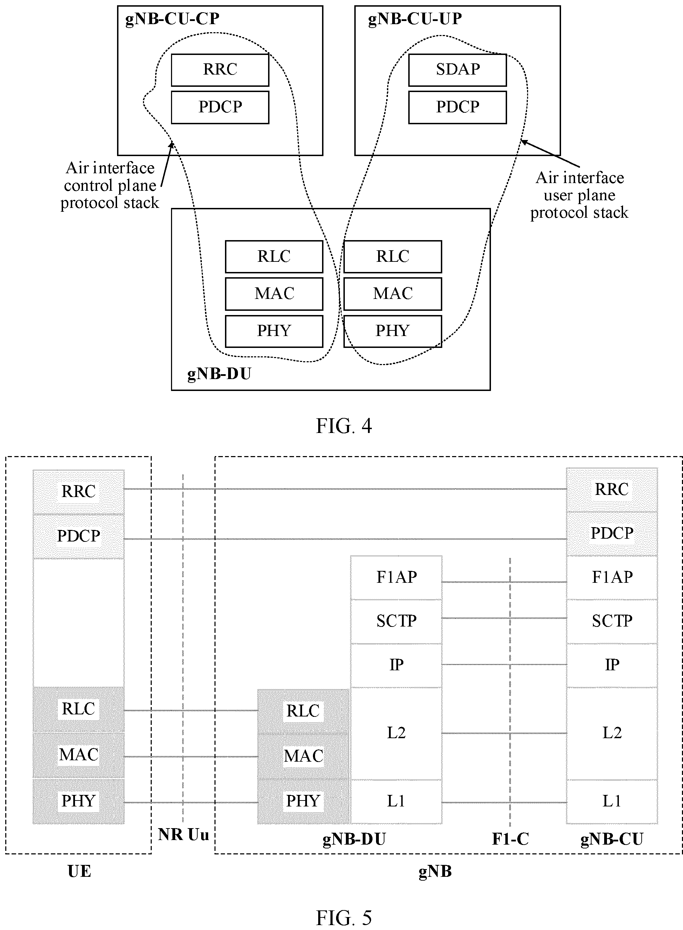

In some embodiments, the gNB-CU may be further divided into two network units: a gNB-CU-CP and a gNB-CU-UP. FIG. 3 is a diagram of an architecture of a CP/UP split gNB according to an embodiment of this application. One gNB-DU and one gNB-CU-UP are connected to only one gNB-CU-CP. Under control of a same gNB-CU-CP, one gNB-DU may be connected to a plurality of gNB-CU-UPs, and one gNB-CU-UP may be connected to a plurality of DUs. The gNB-DU is connected to the gNB-CU-CP and the gNB-CU-UP through an F1-C interface and an F 1-U interface respectively. The gNB-CU-CP is connected to the gNB-CU-UP through an E1 interface. In embodiments of this application, a network device may be a CU, or may be a DU. FIG. 4 is a diagram of distribution of air interface protocol stacks of a gNB-CU and a gNB-DU according to an embodiment of this application. The CU implements functions of radio resource control (radio resource control, RRC) and a packet data convergence layer protocol (packet data convergence protocol, PDCP) that are of a base station, and may further implement a function of a service data adaptation protocol (service data adaptation protocol, SDAP). The DU completes functions of a radio link control (radio link control, RLC) layer and a media access control (media access control, MAC) layer that are of the base station, and may further complete some or all functions of a physical layer (physical layer, PHY). For specific descriptions of the foregoing protocol layers, refer to related technical specifications of the 3rd generation partnership project (3rd generation partnership project, 3GPP).

A terminal device in embodiments of this application may also be referred to as a terminal, and may be a device having wireless receiving and sending functions. The terminal device in embodiments of this application may include various user equipments (user equipments, UEs) having a wireless communication function, an access terminal, a UE unit, a UE station, a mobile station, a remote station, a remote terminal, a mobile device, a UE terminal, a terminal, a wireless communication device, a UE agent, or a UE apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, or another processing device connected to a wireless modem, an uncrewed aerial vehicle (or a drone for short) (unmanned aerial vehicle/drone, UVA), a vehicle-mounted device, a wearable device, a terminal device in a future 5G network, a terminal device in a future evolved PLMN network, or the like. In embodiments of this application, an apparatus configured to implement a function of the terminal may be a terminal, or may be an apparatus that can support the terminal in implementing the function, for example, a chip system. The apparatus may be installed in the terminal. In embodiments of this application, the chip system may include a chip, or may include a chip and another discrete component.

Embodiments of this application may be applied to a device to device (device to device, D2D) system, a machine to machine (machine to machine, M2M) system, a vehicle to everything (vehicle to everything, V2X) system, or the like.

Embodiments of this application may be further applied to a next-generation microwave scenario, an NR-based microwave scenario, an integrated access and backhaul (integrated access and backhaul, IAB) scenario, or the like.

In embodiments of this application, the network device and the terminal device may be at fixed locations, or may be movable. The network device and the terminal device may be deployed on land, including an indoor device, an outdoor device, a handheld device, or a vehicle-mounted device. Application scenarios of the network device and the terminal device are not limited in embodiments of this application.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some related content/concepts in embodiments of this application.
1. Control plane (control plane, CP) protocol stack in a case in which a CU/DU split architecture is used for a gNB

FIG. 5 is a diagram of a control plane protocol stack in a case in which a CU/DU split architecture is used for a gNB according to an embodiment of this application. Specifically, a UE accesses a gNB-CU via a gNB-DU. In other words, functions of a PHY layer, a MAC layer, and an RLC layer that are peer layers of the UE are on the gNB-DU, and functions of a PDCP layer, an SDAP layer, and an RRC layer that are peer layers of the UE are on the gNB-CU.

For a control plane, in an uplink (uplink, UL) direction, the gNB-DU encapsulates, in an F1 application protocol (F1 application protocol, F1AP) message on an F1 interface, an RRC message generated by a terminal (for example, the user equipment (user equipment, UE)), and sends the F1 application protocol message to the gNB-CU. In a downlink (downlink, DL) direction, the gNB-CU encapsulates the RRC message in the F1AP message and sends the F1AP message to the gNB-DU. The gNB-DU extracts the RRC message from the F1AP message, maps the RRC message to a signaling radio bearer (signaling radio bearer, SRB, including an SRB0, an SRB1, and an SRB2) corresponding to a Uu interface, and sends the RRC message to the UE.

### 2. User plane (user plane, UP) protocol stack in a case in which a CU/DU split architecture is used for a gNB

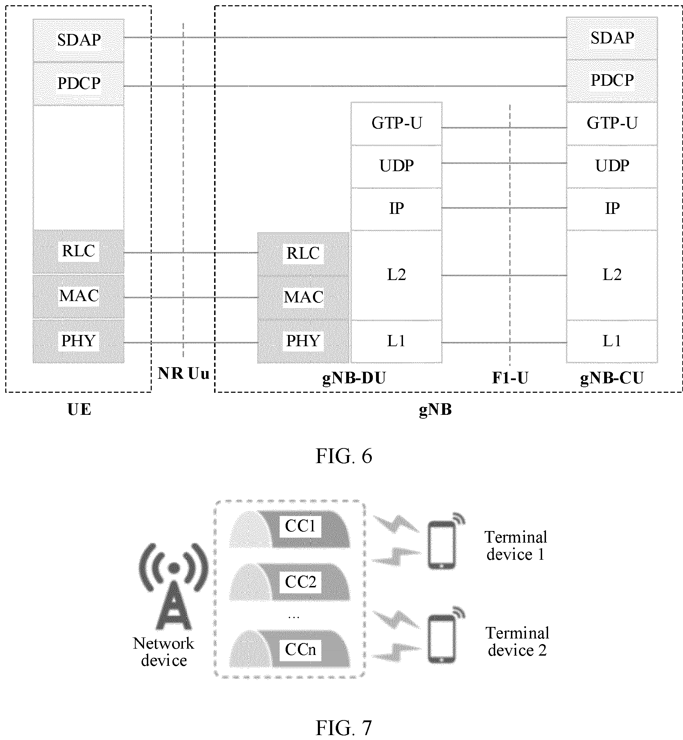

FIG. 6 is a diagram of a user plane protocol stack in a case in which a CU/DU split architecture is used for a gNB according to an embodiment of this application. For a user plane, in a UL direction, a gNB-DU maps a UE data packet received from a data radio bearer (data radio bearer, DRB) on a Uu interface to a corresponding tunnel identified by a general packet radio system (general packet radio system, GPRS) tunneling protocol (GPRS tunneling protocol, GTP), and sends the UE data packet to a gNB-CU. In a DL direction, the gNB-CU maps the UE data packet to the corresponding GTP tunnel and sends the UE data packet to the gNB-DU. The gNB-DU extracts the UE data packet from the GTP tunnel, maps the UE data packet to the DRB corresponding to the Uu interface, and sends the UE data packet to the UE.

### 3. Carrier aggregation (carrier aggregation, CA)

To meet a requirement for a high data transmission rate in some application scenarios (for example, enhanced mobile broadband (enhanced mobile broadband, eMBB)), a concept of the CAis further introduced into this field. A principle of the CA is to aggregate bandwidths of a plurality of cells for use by a same terminal (for example, a UE). After a plurality of component carriers (component carriers, CCs) are aggregated, a bandwidth that can be enjoyed by the UE is a sum of bandwidths of the plurality of carriers, and a peak rate of the UE can be increased almost proportionally. For example, in LTE, by using a CA technology, two to five CCs may be aggregated together, to implement a maximum transmission bandwidth of 100 MHz, so that uplink and downlink transmission rates can be effectively improved. The terminal may determine, based on a capability of the terminal, a maximum quantity of carriers that can be simultaneously used for uplink and downlink transmission.

FIG. 7 is a diagram of carrier aggregation according to an embodiment of this application. A network device provides n component carriers CC1 to CCn for a terminal device, and a terminal device 1 and a terminal device 2 may perform uplink and downlink transmission by using a carrier obtained by aggregating the n component carriers.

In embodiments of this application, the carrier aggregation may be intra-base-station (inter-DU) CA. In other words, component carriers used for aggregation are provided by a same base station for the terminal. Alternatively, the carrier aggregation may be inter-base-station (inter-CU) CA. In other words, component carriers used for aggregation are provided by two or more base stations. In terms of CA classification, the inter-base-station CA may be intra-band CA (including intra-band contiguous CA and intra-band non-contiguous CA) or may be inter-band CA. The inter-base-station CAuses an Xn interface link for transmission of signaling and data of a coordination service between gNodeBs. The CA performs data splitting at an RLC layer or a MAC layer. Compared with data splitting at a PDCP layer, this is data splitting at the RLC layer or the MAC layer is data splitting at a lower-layer protocol and has a high delay requirement.

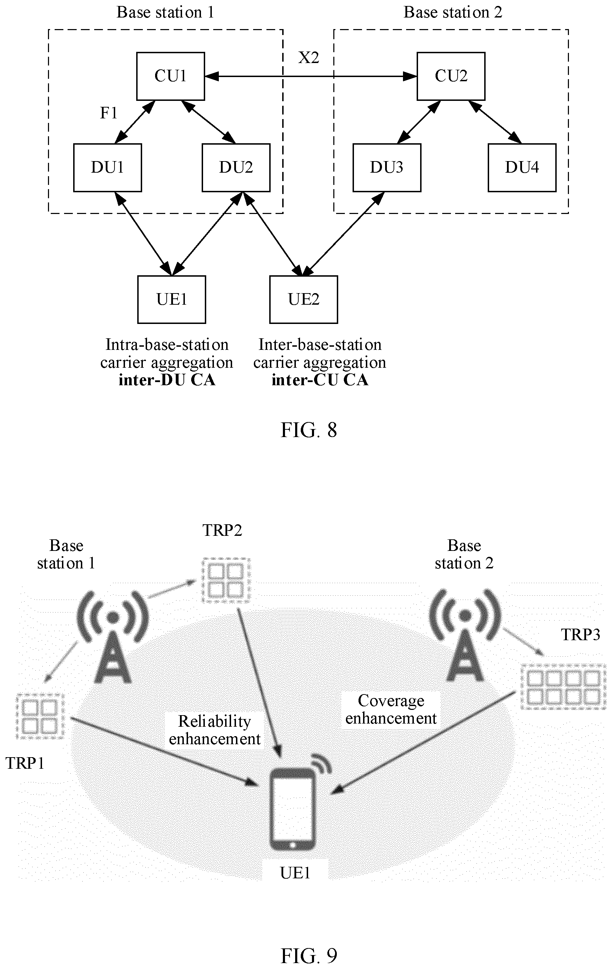

For example, FIG. 8 is a diagram of an intra-base-station CA architecture and an inter-base-station CA architecture according to an embodiment of this application. For example, a communication system includes a base station 1 (including a CU1, a DU1, and a DU2), a base station 2 (including a CU2, a DU3, and a DU4), a terminal 1 (for example, a UE1), and a terminal 2 (for example, a UE2). Transmission of signaling and data of a coordination service between gNodeBs is performed between the CUs through an X2 interface. The CU and the DU are connected through an F1 interface. The DU1 and the DU2 provide intra-base-station CA for the UE1, and the DU2 and the DU3 provide inter-base-station CA for the UE2.

### 4. Inter-gNB/gNB-DU multi-transmission reception point (multi-transmission reception point, multi-TRP)

To reduce impact on signals blocked by obstacles when a gNB is used on high frequencies, the concept of TRP is introduced into 5G. In a high frequency scenario, a plurality of physically separated antennas or a plurality of antenna panels on a same antenna are used to form different spatial channels, in other words, a plurality of transmission reception points (transmission reception points, TRPs) are used to form a multi-TRP (multi-TRP), to form a maximum beamforming gain or a reliability gain of spatial diversity by utilizing the characteristic of non-correlation between the spatial channels, to provide better coverage, better reliability, or a better data rate of a physical downlink shared channel (physical downlink shared channel, PDSCH).

For example, FIG. 9 is a diagram of multi-TRP transmission according to an embodiment of this application. For example, a communication system includes a base station 1, a base station 2, and a terminal 1 (for example, a UE1). The base station 1 includes two TRPs: a TRP1 and a TRP2, and the base station 2 includes one TRP, namely, a TRP3. The TRP1, the TRP2, and the TRP3 form a multi-TRP system, to provide a communication service for the UE1, so that coverage and transmission reliability of a PDSCH can be enhanced.

Generally, there are two multi-TRP operation modes: single downlink control information (downlink control information, DCI) and multi-DCI. For the two modes, uplink and downlink operations are controlled by a physical layer and a MAC layer. In the single-DCI mode, a same piece of DCI is used to schedule the UE on two TRPs. In the multi-DCI mode, different pieces of DCI are used to schedule the UE on two TRPs.

In the multi-TRP transmission, transmission delay between TRPs and a UE capability needs to be considered. For a plurality of antenna panels deployed for one TRP or one gNodeB, ideal transmission with no delay can be implemented. For a plurality of TRPs among different gNodeBs, transmission delay may be 20 ms or longer. Therefore, a 3GPP protocol needs to consider two scenarios: ideal transmission with very short delay or no delay and non-ideal delay with long delay. Different solutions are needed for the two different scenarios. In the non-ideal delay scenario, to meet a delay requirement of a 5G service, DCI, transmission of uplink control information (uplink control information, UCI) and data carried on the PDSCH cannot be simultaneously performed between the TRPs. Therefore, it is considered to support loose coordination transmission between the plurality of TRPs. In other words, each TRP independently schedules transmission on a physical downlink control channel (physical downlink control channel, PDCCH) corresponding to the PDSCH, and the UE also supports independent transmission scheduling. In an ideal delay scenario, control information and data are smoothly exchanged between the TRPs, so that any TRP can schedule transmission/retransmission of the plurality of TRPs (single-DCI multi-TRP transmission). Compared with a multi-DCI design, a single-DCI design allows the UE to monitor smaller search space, so that complexity of UE blind decoding and UE power consumption are reduced.

In an inter-DU-cell carrier aggregation application scenario, data generated by a CU is split to different DUs, and then the different DUs send the data to a same terminal. In a possible implementation, a master DU (master-DU, mDU) splits, to a secondary DU (secondary DU, sDU) through a backhaul link between the DUs, data packets arriving at an RLC layer or a MAC layer. It should be noted that these data packets are not processed by the layer before the splitting. In other words, service data units (service data units, SDUs) at the RLC layer or the MAC layer are split. In addition, in an inter-DU mobility enhancement method, it is already proposed that the CU performs splitting on protocol data units (protocol data units, PDUs) at a PDCP layer, and then sends the protocol data units to the different DUs through a backhaul link between the CU and the DU.

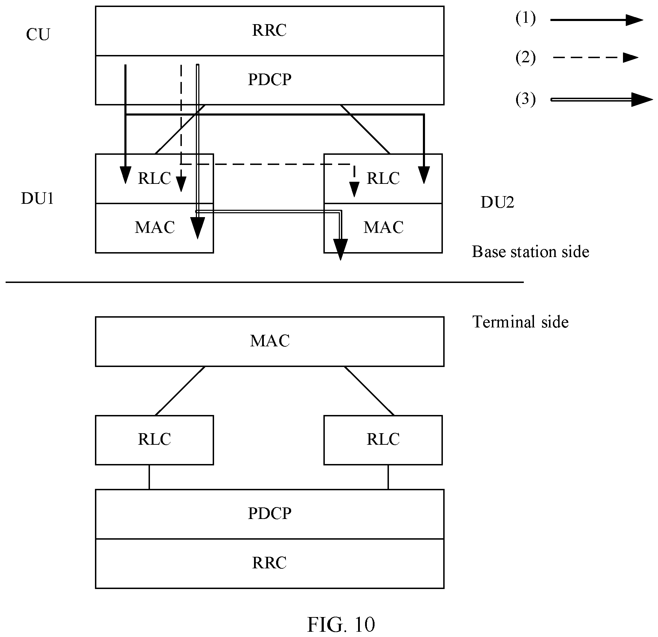

For example, FIG. 10 is a diagram of an architecture of inter-DU-cell data splitting according to an embodiment of this application. A communication system includes a base station and a terminal. The base station includes a CU, a DU1 (serving as a master DU or a master node (master node, MN)), and a DU2 (serving as a secondary DU or a secondary node (secondary node, SN)). In FIG. 10, a data splitting manner shown by an arrow (1) is that the CU splits protocol data units (protocol data units, PDUs) at a PDCP layer. A data splitting manner shown by an arrow (2) is that the master DU steers, to the secondary DU, service data units (Service Data Units, SDUs) arriving at an RLC layer, and these data packets are not processed by the RLC layer before steering. A data splitting manner shown by an arrow (3) is that the master DU steers, to the secondary DU, PDUs from the RLC layer or SDUs arriving at a MAC layer, and these data packets are not processed by the MAC layer before steering. In addition, it should be noted that a format of the data packets in the data splitting manner shown by the arrow (1) may be the same as a format of the data packets in the data splitting manner shown by the arrow (2). However, the former data splitting is performed by the CU, and the latter data splitting is performed by the DU1.

In the two transmission manners described above, different DUs need to separately configure an independent RLC entity or MAC entity for the UE. In addition, because interaction of layer 2 (including the RLC layer and the MAC layer) is related, coordinating DUs need to exchange a large amount of layer 2 parameter information, for example, including a layer 2 context (context), a configuration, and intermediate state variables (intermediate state variables). For example, the intermediate state variables include timers (timers), a correspondence between a hybrid automatic repeat request (hybrid automatic repeat request, HARQ) process and a PDCP entity, an RLC entity or an upper layer entity, data transmission variables of HARQ processes, and the like. The data transmission variables of the HARQ processes include parameters such as a data packet acknowledgment state, a maximum sending or receiving state variable, a sending or receiving state variable, and a transmission window. It can be learned that a configuration of an existing architecture is complex, and information transmission overheads are high. In view of this, the solutions in embodiments of this application are provided.

In embodiments of this application, a first DU (for example, a master DU) receives data of a terminal from an upper layer, enables a MAC entity scheduling function specific to the terminal, processes the data to obtain a physical layer transmission data stream, and then sends the physical layer transmission data stream to a second DU, to form PHY layer data splitting for the terminal. Because a MAC entity of the first DU is used to uniformly schedule the physical layer transmission data stream and the second DU does not enable the MAC entity scheduling function specific to the terminal, the first DU and the second DU do not need to exchange a large amount of layer 2 parameter information, so that information transmission overheads can be reduced.

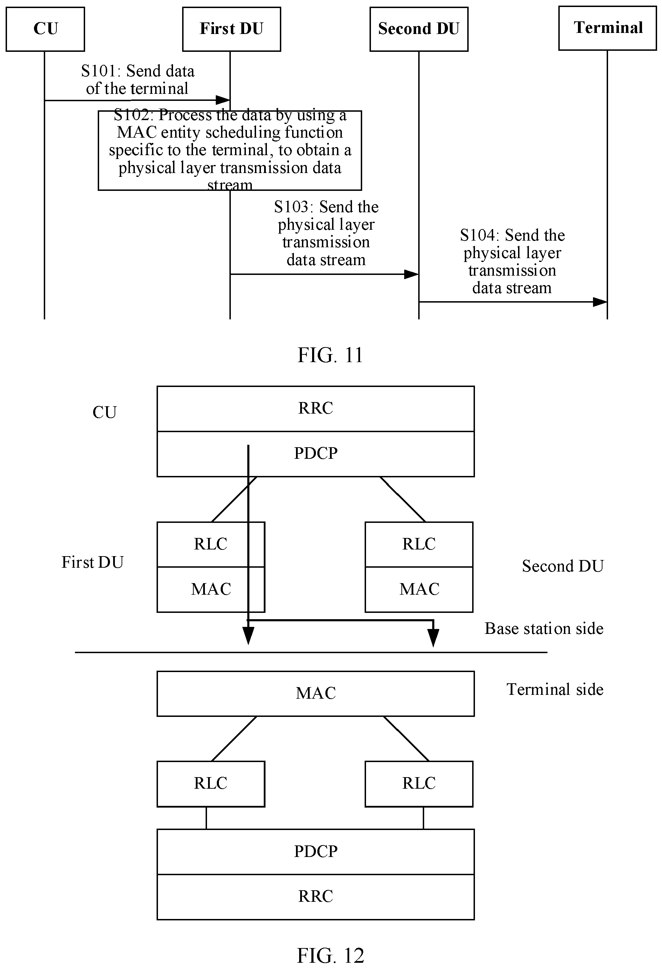

FIG. 11 is a schematic flowchart of an inter-DU communication method according to an embodiment of this application. The method may be implemented based on the network architecture and related devices described in the foregoing content. In this embodiment of this application, a base station uses a CU/DU split architecture. The method includes the following steps.

S101: A CU sends data of a terminal to a first DU.

The data is data generated by the CU and sent to the terminal, namely, downlink data.

In this embodiment of this application, the first DU may be a master DU, in other words, the first DU provides a service for the terminal by using a master cell group (master cell group, MCG). S102: After receiving the data of the terminal from the CU, the first DU processes the data by using a MAC entity scheduling function specific to the terminal, to obtain a physical layer transmission data stream.

The first DU enables the MAC entity scheduling function specific to the terminal. For example, the MAC entity scheduling function may include: (1) error correction using a HARQ mechanism; (2) priority management between different logical channels of a same UE; (3) priority management between UEs through dynamic scheduling; (4) transport format selection, where a corresponding transport format (including a modulation scheme, a coding rate, and the like) is selected based on measurement information, a user capability, and the like reported by a physical layer, to achieve most effective resource utilization; and the like.

In a possible implementation, the physical layer transmission data stream is a media access control protocol data unit (MAC PDU). In this manner, the first DU processes the data by using the MAC entity scheduling function specific to the terminal, and processed data is encapsulated into the MAC PDU.

In another possible implementation, a manner in which the first DU processes the data by using the media access control MAC entity scheduling function specific to the terminal, to obtain the physical layer transmission data stream is specifically: The first DU processes the data by using the media access control MAC entity scheduling function and a physical layer scheduling function that are for the terminal, to obtain the physical layer transmission data stream. In this case, the physical layer transmission data stream is one of the following: a transport block (transport block, TB), a codeword (codeword, CW), and a code block (code block, CB).

The TB is a basic data unit processed by a MAC layer on a transport channel, namely, a basic unit for data exchange between the MAC layer and the physical layer, and is a data information block to be encoded. Data and a signaling message on a user plane need to be processed by a PDCP layer, an RLC layer, and the MAC layer before arriving at the PHY layer. Data processed at the physical layer is actually a PDU from the MAC layer, and a data block of the PDU is the TB. The PHY layer needs to convert the TB into the CW after receiving the TB, and the CB is a name of a data block in a conversion process. In other words, the CB is a data unit obtained after the MAC layer submits the TB to the PHY layer for adding a cyclic redundancy code check (cyclic redundancy check, CRC) and segmentation processing, and is a basic data unit processed before a general encoding procedure at the physical layer ends. The CW is a processing result obtained after the physical layer performs a series of operations such as the CRC, segmentation, channel encoding, and reassembly on the TB. In other words, the CW is encoded data information.

In another possible implementation, the physical layer transmission data stream may alternatively be a baseband modulation symbol generated by modulating different CWs, or may be an orthogonal frequency division multiplexing (orthogonal frequency division multiplexing, OFDM) symbol generated by combining modulation symbols to perform layer mapping and precoding/weighting, and then mapping the modulation symbols to a radio resource element (resource element, RE) block.

S103: The first DU sends the physical layer transmission data stream to a second DU.

Optionally, the physical layer transmission data stream may be all or a part of the physical layer transmission data stream of the first DU. The second DU provides a service for the terminal by using a secondary cell group (secondary cell group, SCG). The first DU and the second DU may be DUs connected to a same CU (for example, refer to the DU1 and the DU2 in FIG. 8), or may be DUs connected to different CUs (for example, refer to the DU2 and the DU3 in FIG. 8).

Specifically, the first DU sends the physical layer transmission data stream to the second DU through an interface between the first DU and the second DU. Optionally, the interface between the first DU and the second DU may be directly connected in a wired or wireless manner. Optionally, a connection between the first DU and the second DU may not be a direct connection. For example, the connection between the first DU and the second DU may be implemented by multiplexing an optical fiber between the DU and the CU.

For example, FIG. 12 is a diagram of an architecture of inter-DU-cell data splitting according to an embodiment of this application. A communication system includes a base station and a terminal. The base station includes a CU, a first DU (serving as a master DU), and a second DU (serving as a secondary DU). In this example, the first DU and the second DU are DUs connected to a same CU. The first DU splits, to the secondary DU, a physical layer transmission data stream processed by a MAC layer. Because a MAC entity of the first DU is used to uniformly schedule the physical layer transmission data stream and the second DU does not need to enable a MAC entity scheduling function specific to the terminal, the first DU and the second DU do not need to exchange a large amount of layer 2 parameter information, so that information transmission overheads can be reduced.

In some embodiments, to enable the second DU to determine a manner of sending the physical layer transmission data stream to the terminal, the first DU further sends physical layer transmission control information to the second DU. The second DU may determine, based on the physical layer transmission control information, a configuration parameter used for downlink transmission, and reserve a transmission resource needed for the downlink transmission. The physical layer transmission control information includes one or more of the following: related parameter information of DCI, related parameter information of a TB, CB or CW (for example, a size of the TB and a size of the CB), parameter information of a modulation and coding scheme (modulation and coding scheme, MCS), parameter information of transmit power control (transmit power control, TPC), status parameter information of a transmission configuration indicator (transmission configuration indicator, TCI), parameter information of a precoding matrix indication (precoding matrix indication, PMI), parameter information of an antenna port (port), related parameter information of a time-frequency location and a search space (Searchspace) that are of a PDCCH (for example, a PDCCH per UE) for the terminal in a control resource set (control-resource set, CORESET), information about a data scrambling identifier (data scrambling ID) of a PDSCH, and information about a radio network temporary identifier (radio network temporary identifier, RNTI). The data scrambling identifier of the PDSCH is included in PDSCH-Config IE_>dataScramblingIdentityPDSCH IE. The RNTI may include various RNTIs, for example, a cell radio network temporary identifier (cell RNTI, C-RNTI), a system information radio network temporary identifier (system information RNTI, SI-RNTI), and a paging radio network temporary identifier (paging RNTI, P-RNTI).

It should be noted that, in the CORESET, the related parameter information of the time-frequency location and the Searchspace that are of the PDCCH for the terminal, the information about the data scrambling identifier of the PDSCH, and the information about the radio network temporary identifier RNTI are included in an RRC configuration message and a system information block (system information block, SIB) message that are sent by the CU to the terminal via the first DU. Therefore, during specific implementation, the first DU may directly forward, to the second DU, a parameter value or an information element value in the RRC configuration message and the SIB message that are sent by the CU.

Specifically, in an NR system, information such as a frequency band occupied by the PDCCH in frequency domain and a quantity of OFDM symbols occupied by the PDCCH in time domain is encapsulated in the CORESET, and information such as a PDCCH start OFDM symbol number and a PDCCH monitoring periodicity is encapsulated in the Searchspace. Each Searchspace is associated with one CORESET. After one CORESET is bound to one Searchspace, a PDCCH configuration can be determined. In addition, transmission of DCI with different content is performed on the PDCCH, and the DCI may be distinguished through scrambling using different RNTIs. For example, a C-RNTI, a P-RNTI, and a SI-RNTI are respectively used to scramble DCI for scheduling transmission of a broadcast message, a paging message, terminal data, and the like. First, the terminal needs to demodulate, based on an RNTI value, DCI that is scrambled by using an RNTI and whose transmission is performed on the PDCCH. Then, at a PDSCH time-frequency resource location indicated by the DCI, the terminal demodulates, based on a data scrambling ID, information whose transmission is performed on a PDSCH of the terminal, such as a broadcast message, a paging message, and terminal data.

S104: The second DU sends the physical layer transmission data stream to the terminal.

Specifically, the second DU forbids enabling the MAC entity scheduling function specific to the terminal. For the MAC entity scheduling function, refer to descriptions in the foregoing content. Details are not described herein again. In addition, the second DU further forbids enabling an RLC layer entity scheduling function specific to the terminal and bearer mapping configurations such as an RLC channel and a DRB. In other words, in this solution, the first DU uniformly schedules downlink transmission of the first DU and the second DU.

In a possible implementation, a specific manner in which the second DU sends the physical layer transmission data stream to the terminal is: The second DU determines, based on the related parameter information of the time-frequency location and the Searchspace that are of the PDCCH for the terminal in the CORESET in the physical layer transmission control information, the time-frequency location of the PDCCH corresponding to the terminal. The second DU determines a time-frequency location of the PDSCH based on the related parameter information of the DCI in the physical layer transmission control information. The second DU sends, to the terminal through the PDCCH, DCI scrambled by using the RNTI, where the DCI indicates the PDSCH. The second DU sends, to the terminal through the PDSCH, the physical layer transmission data stream scrambled by using the data scrambling identifier of the PDSCH. For example, the physical layer transmission data stream may be a broadcast message, a paging message, or a data message sent to the terminal. In this implementation, the second DU sends the DCI to the terminal. For example, an application scenario of this implementation may include a multi-DCI inter-DU multi-TRP transmission scenario for non-ideal backhaul (Backhaul, BH) between DUs.

In another possible implementation, a specific manner in which the second DU sends the physical layer transmission data stream to the terminal is: The second DU determines a time-frequency location of the PDSCH based on the related parameter information of the DCI in the physical layer transmission control information, and sends, to the terminal through the PDSCH, the physical layer transmission data stream scrambled by using the data scrambling identifier of the PDSCH. In this implementation, the second DU does not send DCI to the terminal, but sends data information to the terminal through a PDSCH indicated by the related parameter information of the DCI sent by the first DU to the terminal. For example, an application scenario of this implementation may include a single-DCI inter-DU multi-TRP transmission scenario for ideal BH between DUs.

Optionally, in some embodiments, the CU sends indication information to the first DU and the second DU, where the indication information includes an identifier of the terminal, and the indication information indicates the first DU and the second DU to perform inter-DU coordination transmission for the terminal. That the first DU and the second DU perform the inter-DU coordination transmission for the terminal may be understood as: The first DU and the second DU jointly provide a data transmission service for the terminal device. For the first DU, the first DU may directly send data to the terminal. For the second DU, the second DU may receive the physical layer transmission data stream obtained by processing the data of the terminal by the first DU, and then send the physical layer transmission data stream to the terminal, which is the data transmission manner shown in FIG. 11.

Optionally, the CU sends the indication information to the first DU and the second DU through an F1 interface. The indication information further indicates the second DU to forbid enabling (or referred to as not to enable) the MAC entity scheduling function for a coordinatively served UE, in other words, forbid enabling a MAC layer scheduler for the coordinatively served UE. Optionally, an existing UE F1AP ID information element may indicate that the UE associated with the existing UE F1AP ID information element is a coordinatively served UE. The indication information and a UE F1AP ID may be included in an F1AP message sent by the CU to the DU. The indication information may be indicated by defining new UE-associated F1AP signaling (UE-associated signaling).

It should be noted that control plane signaling between the CU and the DU is sent by using an F1AP protocol layer, and is referred to as an F1AP message. The F1AP message is classified into two types: (1) Non-UE-associated (Non-UE-associated) service: related to an entire F1 interface instance between the gNB-DU and the gNB-CU, and using a non-UE-associated signaling connection. (2) UE-associated (UE-associated) service: related to one UE, where an F 1AP function that provides the service uses a UE-associated signaling connection to serve the UE. Generally, there is at most one F1AP procedure related to a specific UE at a protocol endpoint.

Optionally, after receiving the indication information and the UE F1AP ID, the second DU does not set up a UE context (UE context) for the indicated UE (namely, the coordinatively served UE), where the context includes bearer configurations such as an SRB, a DRB, a BH RLC channel, and a logical channel. In addition, the second DU does not enable a layer 2 scheduler for scheduling a data packet of the UE. During specific implementation, the second DU may alternatively enable some functions of the MAC entity, to distinguish whether an uplink data packet is from the inter-DU coordinatively served UE or a UE independently served by the second DU.

The foregoing content describes a downlink transmission process in the inter-DU coordination transmission performed by the first DU and the second DU for the terminal. The following further describes uplink transmission in the inter-DU coordination transmission scenario.

In a possible implementation, UL scheduling and UL transmission for the terminal (namely, the coordinatively served terminal) can be processed only on the first DU (or an MCG). In this manner, the terminal triggers and reports uplink control information (uplink control information, UCI) only to the MCG of the first DU, where the UCI includes one or more of the following: a buffer status report (buffer status report, BSR), a power headroom report (power headroom report, PHR) status report, a timing advance (timing advance, TA), and a measurement reference signal (sounding reference signal, SRS) measurement result. A measurement reference signal may also be referred to as a channel sounding reference signal, a listening reference signal, a sounding reference signal, a monitoring reference signal, or the like.

In addition, the terminal sends uplink feedback information only to the first DU, where the uplink feedback information includes HARQ receiving state feedback information. For example, the HARQ receiving state feedback information includes an acknowledgment (acknowledgement, ACK) message and a negative acknowledgment (negative acknowledgement, NACK) message.

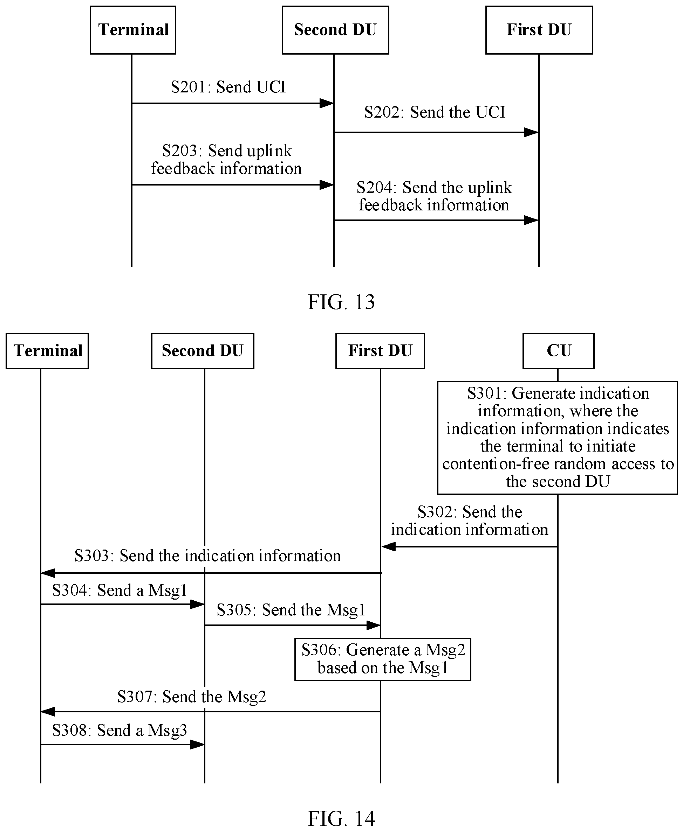

In another possible implementation, the UL scheduling and the UL transmission for the terminal (namely, the coordinatively served terminal) can also be processed on the second DU (or an SCG). In this manner, in addition to sending the UCI and the uplink feedback information to the first DU, the terminal may further send the UCI and the uplink feedback information to the second DU. For example, FIG. 13 is a schematic flowchart of another inter-DU communication method according to an embodiment of this application.

S201: A terminal sends UCI to a second DU.

For the UCI, refer to the descriptions in the foregoing content. Details are not described herein again. Optionally, the terminal triggers and reports a BSR or a PHR in a secondary cell group of the second DU. Optionally, when performing scheduling and transmission in the secondary cell group of the second DU, the terminal sends a TA and an SRS measurement result to the second DU.

S202: After receiving the UCI from the terminal, the second DU sends the UCI to a first DU. S203: The terminal sends uplink feedback information to the second DU.

For the uplink feedback information, refer to the descriptions in the foregoing content. Details are not described herein again. Optionally, a HARQ entity at a MAC layer of the terminal generates status acknowledgment feedback information (for example, an ACK or a NACK) for a received data packet.

S204: After receiving the uplink feedback information from the terminal, the second DU sends the uplink feedback information to the first DU.

In the method embodiments corresponding to FIG. 11 and FIG. 13, the first DU splits the physical layer transmission data stream, so that the first DU and the second DU can implement coordination transmission at the physical layer for a same terminal. Because a MAC layer entity of the first DU is used to process the physical layer transmission data stream and the second DU does not need to enable a MAC entity scheduling function specific to the terminal, the first DU and the second DU do not need to exchange a large amount of layer 2 parameter information, so that information transmission overheads can be reduced. This manner may be applicable to scenarios such as inter-DU multi-TRP transmission and inter-DU CA transmission.

The foregoing content describes a manner in which the first DU and the second DU perform inter-DU coordination transmission for the terminal. Considering that BH between the DUs may be non-ideal, in other words, transmission between the DUs may cause additional transmission delay, embodiments of this application further provide some random access enhancement methods for the second DU. The following describes content of this part. It should be noted that, the random access enhancement method for the second DU proposed in the following content is also applicable to the split architecture shown in FIG. 10.

First, a concept of random access (random access, RA) is described. Uplink synchronization between the terminal (for example, the UE) and a gNB is implemented in a random access (namely, RA) manner. In a synchronization system, for the gNB, because distances from different UEs to the gNB are different, uplink data of the different UEs may arrive at different time, causing interference. Therefore, the gNB expects signal arrival time of different UEs from a same subframe to be basically aligned. The gNB can correctly receive uplink data sent by the UE, provided that a signal falls within a cyclic prefix (cyclic prefix, CP) range. The gNB may obtain an uplink timing offset (time advance, TA) by measuring an RA preamble (RA preamble, namely, a Msg1) sent by the UE. In an RA process, the UE needs to initiate access on a time-frequency resource of a specific physical random access channel (physical random access channel, PRACH). A signal transmitted by the UE when the UE initiates the access is an RA preamble. The RA preamble is used to notify the gNB that there is a random access request, so that the gNB can estimate transmission delay between the gNB and the UE. Further, the gNB sends a TA value to the UE with an RA response (Random Access Response, namely, a Msg2) message. In addition, the gNB may further allocate uplink resources (an UL grant) to the UE through the RA, so that the UE sends uplink signaling and data on these resources.

There are two CA mechanisms: contention-based RA (contention-based random access, CBRA) and contention-free RA (contention-free random access, CFRA). In a CBRA process, because a preamble is randomly selected by the UE within a preamble range broadcast in a system information block 1 (System Information Block 1, SIB1), preambles selected by different UEs may conflict. Therefore, the gNB handles access of the different UEs through contention. However, the access result is random and not all access of the UEs succeeds. In a CFRA process, because a preamble is a dedicated preamble allocated by the gNB to the UE, a preamble conflict does not occur on the UE. In a special case, when dedicated preambles are insufficient, the gNB indicates the UE to initiate CBRA.

FIG. 14 is a schematic flowchart of another inter-DU communication method according to an embodiment of this application. The method may be implemented based on the network architecture and related devices described in the foregoing content. In this embodiment of this application, a base station uses a CU/DU split architecture. A first DU serves as a master DU, and provides a service for a terminal by using a master cell group. A second DU serves as a secondary DU, and provides a service for the same terminal by using a secondary cell group. In the method shown in FIG. 14, the terminal accesses the second DU in a contention-free random access manner. The method includes the following steps.

S301: A CU generates indication information, where the indication information indicates the terminal to initiate contention-free random access to the second DU.

For example, the indication information may be Random Access Preamble Assignment.

In a possible implementation, the indication information indicates a dedicated preamble used for the contention-free random access. In another possible implementation, the indication information indicates a dedicated random access resource (for example, a time-frequency resource of a PRACH) used for the contention-free random access. In another possible implementation, the indication information indicates a dedicated preamble and a dedicated random access resource that are used for the contention-free random access.

Optionally, the indication information may be included in an RRC message or DCI.

S302: The CU sends the indication information to the first DU.

S303: After receiving the indication information from the CU, the first DU sends the indication information to the terminal.

S304: After receiving the indication information from the first DU, the terminal sends a random access message 1 (Msg1) to the second DU based on the indication information.

For example, the Msg1 may be Random Access Preamble.

Optionally, an implementation in which the terminal sends the Msg1 to the second DU based on the indication information may include the following several cases: In a possible implementation, the indication information indicates the dedicated preamble used for the contention-free random access. In this case, the Msg1 sent by the terminal includes the dedicated preamble. In another possible implementation, the indication information indicates the dedicated random access resource used for the contention-free random access. In this case, the terminal sends the Msg1 to the second DU by using the dedicated random access resource. In another possible implementation, the indication information indicates the dedicated preamble and the dedicated random access resource that are used for the contention-free random access. In this case, the terminal sends the Msg1 to the second DU by using the dedicated random access resource, where the Msg1 includes the dedicated preamble.

S305: After receiving the Msg1 from the terminal, the second DU sends the Msg1 to the first DU. Optionally, the second DU receives the Msg1 from the terminal based on the indication information. Specifically, a manner of the receiving corresponds to a manner of sending the Msg1 by the terminal, and may include the following several cases: In a possible implementation, the indication information indicates the dedicated preamble used for the contention-free random access. In this case, the Msg1 received by the second DU includes the dedicated preamble. In another possible implementation, the indication information indicates the dedicated random access resource used for the contention-free random access. In this case, the second DU receives the Msg 1 from the terminal by using the dedicated random access resource. In another possible implementation, the indication information indicates the dedicated preamble and the dedicated random access resource that are used for the contention-free random access. In this case, the second DU receives the Msg1 from the terminal by using the dedicated random access resource, where the Msg1 includes the dedicated preamble.

S306: After the first DU receives the Msg1 from the second DU, the first DU generates a random access message 2 (Msg2) based on the Msg1.

For example, the Msg2 may be a random access response. The first DU sends the Msg2 on a PDSCH (one PDSCH may be used to simultaneously send the Msg2 to a plurality of terminals), to indicate that the first DU receives the Msg1. Optionally, the first DU may estimate transmission delay between the secondary DU and the terminal based on the Msg1, to determine a TA value. The Msg2 includes the TA value, where the TA value is used to adjust uplink sending timing of the terminal. In addition, information carried in the Msg2 may further include an RA preamble identifier (RA-preamble identifier), an uplink transmission grant (UL grant), a temporary C-RNTI identifier (Temporary C-RNTI or TC-RNTI), and the like.

S307: The first DU sends the Msg2 to the terminal.

S308: After receiving the Msg2 from the first DU, the terminal sends a Msg3 to the second DU. For example, the Msg3 may be Scheduled Transmission.

Optionally, after sending the Msg1, the terminal starts an RA response time window (for example, ra-ResponseWindow), and continuously monitors a PDCCH in the RA window until a needed RA response (namely, the Msg2) is obtained on the PDSCH. Generally, a value "sl80" of an ra-ResponseWindow IE indicates 80 slots (slots), and is a maximum length of the response time window. The terminal generates the Msg3 based on the received Msg2.

In the method shown in FIG. 14, the terminal accesses the second DU in the contention-free random access manner, so that a success rate of accessing the second DU by the terminal can be improved.

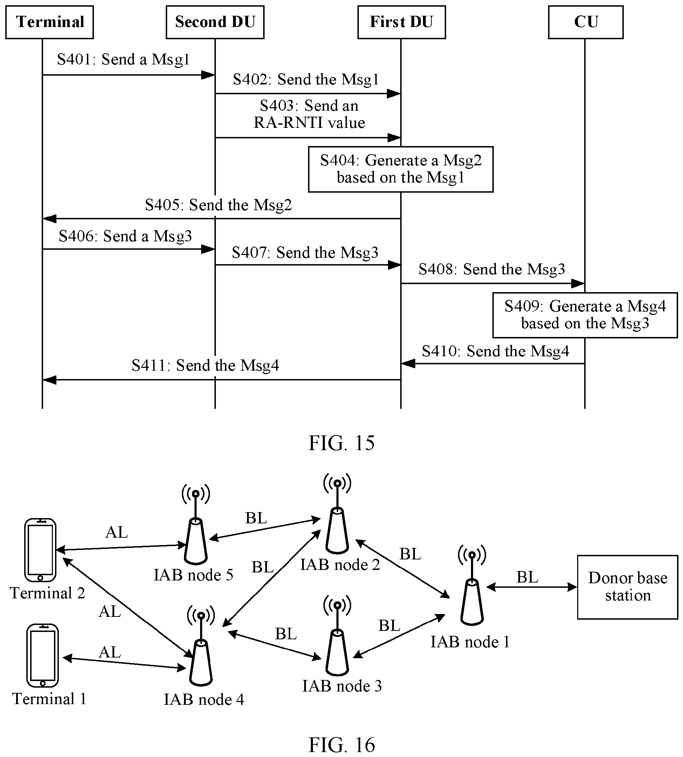

FIG. 15 is a schematic flowchart of another inter-DU communication method according to an embodiment of this application. The method may be implemented based on the network architecture and related devices described in the foregoing content. In this embodiment of this application, a base station uses a CU/DU split architecture. A first DU serves as a master DU, and provides a service for a terminal by using a master cell group. A second DU serves as a secondary DU, and provides a service for the same terminal by using a secondary cell group. In the method shown in FIG. 15, the terminal accesses the second DU in a manner of contention-based random access. The method includes the following steps.

S401: The terminal sends a random access message 1 (Msg1) to the second DU.

For example, the Msg1 may be Random Access Preamble. A preamble included in the Msg1 is randomly selected by the terminal within a preamble range broadcast in a system information block 1 (SIB1).

S402: After receiving the Msg1 from the terminal, the second DU sends the Msg1 to the first DU. Optionally, the second DU may send the Msg1 to the master DU through an interface or a channel between the first DU and the second DU. Optionally, the interface between the first DU and the second DU may be directly connected in a wired or wireless manner. Optionally, a connection between the first DU and the second DU may not be a direct connection. For example, the connection between the first DU and the second DU may be implemented by multiplexing an optical fiber between the DU and a CU. In the following content, information exchange between the first DU and the second DU may be performed through this interface. Details are not described subsequently.

S403: The second DU sends a random access radio network temporary identifier (RA-RNTI) value of the secondary cell to the first DU.

The RA-RNTI value of the secondary cell is calculated by the second DU based on a time-frequency location of a PRACH at which the Msg1 is received, and there is a correspondence between the secondary cell and the second DU. Specifically, the RA-RNTI value is used to determine a time-frequency location of a first PDCCH for scheduling a random access message 2 (Msg2) and a time-frequency location of a first PDSCH for transmission of data information of the Msg2, and is used to perform data scrambling on first DCI whose transmission is performed by the first PDCCH. S404: The first DU receives the random access message 1 (Msg1) from the second DU, and the first DU generates the Msg2 based on the Msg1.

For example, the Msg2 may be a random access response. Optionally, the first DU determines, based on the RA-RNTI value, the time-frequency location of the first PDCCH for scheduling the Msg2 and the time-frequency location of the first PDSCH for transmission of the data information of the Msg2, and scrambles the first DCI by using the RA-RNTI. The Msg2 may include a TA, an RA-preamble identifier, a UL grant, and a TC-RNTI.

S405: The first DU sends the Msg2 to the terminal.

In a possible implementation, the first DU directly sends the Msg2 to the terminal. Specifically, the first DCI for scheduling the first PDSCH is sent to the terminal on the first PDCCH, and the data information of the Msg2 is sent on the first PDSCH.

In another possible implementation, the first DU sends the Msg2 to the terminal via the second DU. In this manner, the first DU sends the Msg2 to the second DU.

For the second DU, the second DU is used to determine the time-frequency location of the first PDCCH and the time-frequency location of the first PDSCH based on the RA-RNTI value. The second DU receives the Msg2 from the master DU. The second DU sends the first DCI to the terminal through the first PDCCH, where the first DCI is scrambled based on the RA-RNTI, and the first DCI indicates the first PDSCH. The second DU sends the data information of the Msg2 to the terminal through the first PDSCH.

S406: After receiving the Msg2 sent by the first DU, the terminal sends a random access message 3 (Msg3) to the second DU.

Optionally, the terminal may receive, via the second DU, the Msg2 sent by the first DU. For example, the Msg3 may be Scheduled Transmission.

Optionally, after sending the Msg1, the terminal starts an RA response time window (for example, ra-ResponseWindow), continuously monitors a PDCCH (the first PDCCH in this embodiment) in the RA window, and simultaneously performs descrambling by using the RA-RNTI until a needed RA response (namely, the Msg2) is obtained on the PDSCH. In this embodiment, the response time window in which the terminal monitors the first PDCCH or the Msg2 is greater than 80 slots. It should be noted that duration of the response time window is greater than duration in which the terminal monitors another general Msg2. In other words, in this embodiment, a longer response time window is configured for a process in which the terminal accesses the second DU in the manner of contention-based random access. In this way, impact of non-ideal BH between the DUs can be reduced, and a success rate of accessing the second DU by the terminal can be increased. For example, the Msg3 may be Scheduled Transmission. The terminal generates the Msg3 based on the received Msg2.

S407: After receiving the Msg3 from the terminal, the second DU sends the Msg3 to the first DU. Optionally, the second DU may send the Msg3 to the first DU through an interface or a channel between the first DU and the second DU.

S408: After receiving the Msg3 from the second DU, the first DU sends the Msg3 to the CU. For example, the Msg3 may be an RRC message.

S409: After receiving the Msg3 from the first DU, the CU generates a Msg4 based on the Msg3. Optionally, an RRC layer of the CU generates the Msg4 based on the Msg3.

S410: The CU sends the Msg4 to the first DU.

S411: After receiving the Msg4 from the CU, the first DU sends the Msg4 to the terminal.

In a possible implementation, the first DU directly sends the Msg4 to the terminal. Specifically, second DCI for scheduling a second PDSCH is sent to the terminal on a second PDCCH, where the second DCI is scrambled based on the TC-RNTI, and data information of the Msg4 is sent on the second PDSCH.

In another possible implementation, a search space of the second PDCCH for scheduling the Msg4 is configured for the second DU. The search space may be a common or dedicated search space (common/dedicated Searchspace). In this case, the first DU may send the Msg4 to the terminal via the second DU. In this manner, the first DU sends the Msg4 to the second DU. For the second DU, the second DU receives the Msg4 from the first DU. Then, the second DU sends the second DCI to the terminal through the second PDCCH, where the second DCI is scrambled based on the TC-RNTI, and the second DCI indicates the second PDSCH. The second DU sends the data information of the Msg4 to the terminal through the second PDSCH. Optionally, the TC-RNTI may be a TC-RNTI of the secondary cell of the second DU, or may be a TC-RNTI sent by the first DU to the second DU.

It should be noted that, after sending the Msg3, the terminal starts a contention resolution timer (contention resolution timer), and then monitors a PDCCH (the second PDCCH in this embodiment) in a time window of the timer. A gNB assists the UE in contention resolution by using the TC-RNTI for scrambling on the PDCCH or by using a UE contention resolution identity for scrambling on the PDSCH. Before the contention resolution timer expires, the UE keeps monitoring the PDCCH channel and also uses the TC-RNTI for descrambling. If the TC-RNTI of the UE is detected on the PDCCH corresponding to the Msg4, the UE considers that the contention resolution succeeds (in other words, access of the UE succeeds) and stops the contention resolution timer. If the TC-RNTI of the UE is not detected on the PDCCH of the Msg4, the UE does not stop the timer. In this embodiment, maximum duration of the timer for monitoring the second PDCCH or the Msg4 by the terminal is greater than duration of 64 subframes. It should be noted that the maximum duration of the timer is greater than duration in which the terminal monitors another general Msg4. In other words, in this embodiment, longer maximum duration of the timer is configured for the process in which the terminal accesses the second DU in the manner of contention-based random access. In this way, the impact of the non-ideal BH between the DUs can be reduced, and the success rate of accessing the second DU by the terminal can be increased.

This embodiment of this application may be further applied to an integrated access and backhaul (integrated access and backhaul, IAB) network communication system shown in FIG. 16. The communication system includes a terminal, an IAB node, and a donor base station. In this application, an "IAB network" is merely an example, and may be replaced with a "wireless backhaul network" or a "relay network". The "IAB node" is also merely an example, and may be replaced with a "wireless backhaul device" or a "relay node". The "IAB node" in this embodiment of this application may be a first node.

The donor base station (donor base station) may serve as a donor node of the IAB node. In this application, the donor base station may include but is not limited to: a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB or home NodeB), a transmission point (transmission and reception point or transmission point), a road side unit (road side unit, RSU) having a base station function, a baseband unit (baseband unit, BBU), and a remote radio unit (Remote Radio Unit, RRU), an active antenna unit (active antenna unit, AAU), one or a group of antenna panels, a node having a base station function in a subsequent evolved system, or the like. The donor base station may be an entity, and may further include a central unit (central unit, CU) entity and at least one distributed unit (distributed unit, DU) entity. An interface between a CU and a DU may be referred to as an F1 interface. Two ends of the F1 interface are respectively the CU and the DU. A peer end of an F1 interface of the CU is the DU, and a peer end of an F1 interface of the DU is the CU. The F 1 interface may further include a control plane F1 interface (F 1-C) and a user plane F1 interface (F 1-U). In this application, the CU of the donor base station may be referred to as a donor CU for short, and the DU of the donor base station may be referred to as a donor DU for short.

In this application, the terminal is sometimes also referred to as a user equipment (user equipment, UE), a mobile station, a terminal device, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. The terminal may include but is not limited to: a user equipment UE, a mobile station, a mobile device, a terminal device, a user agent, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, wearable devices (such as a smart watch, a smart band, and smart glasses), smart furniture or a home appliance, a vehicle device in vehicle to everything (vehicle to everything, V2X), a terminal device having a relay function, a customer premises equipment (customer premises equipment, CPE), an IAB node (specifically an MT of the IAB node or an IAB node playing a terminal role), and the like. A specific name and an implementation form of the terminal are not limited in this application.

In this application, the IAB node may include at least one mobile termination (mobile termination, MT) and at least one distributed unit DU (distributed unit, DU). The IAB node may be an entity. For example, the IAB node includes at least one MT function and at least one DU function. The IAB node may alternatively include a plurality of entities. For example, the IAB node includes at least one MT entity and at least one DU entity. The MT entity and the DU entity may communicate with each other, for example, communicate with each other through a network cable. When communicating with a parent node of the IAB node (the parent node may be the donor base station or another IAB node), the IAB node may serve as a terminal. For example, the IAB node is used in the various scenarios in which the terminal is used. In other words, the IAB node plays a terminal role. In this case, the MT function or the MT entity provides the terminal role for the IAB node. When orienting to a child node of the IAB node (the child node may be another IAB node or a terminal), the IAB node may serve as a network device. In other words, the IAB node plays a network device role. In this case, the DU function or the DU entity provides the network device role for the IAB node. In this application, the MT of the IAB node may be referred to as an IAB-MT for short, and the DU of the IAB node may be referred to as an IAB-DU for short. The IAB node may access the donor base station, or may be connected to the donor base station through another IAB node.

The IAB network supports multi-hop networking and multi-connectivity networking to ensure reliability of service transmission. The IAB node considers an IAB node that provides a backhaul service for the IAB node as a parent node, and correspondingly, the IAB node may be considered as a child node of the parent node of the IAB node. The terminal may alternatively consider an IAB node accessed by the terminal as a parent node, and correspondingly, the IAB node may alternatively consider the terminal accessing the IAB node as a child node. The IAB node may consider a donor base station accessed by the IAB node as a parent node, and correspondingly, the donor base station may alternatively consider the IAB node accessing the donor base station as a child node. As shown in FIG. 16, a terminal 1 may be referred to as a downstream node or a descendant node of an IAB node 4. Each IAB node needs to maintain a backhaul link (backhaul link, BL) orienting to a parent node. If a child node of the IAB node is a terminal, the IAB node further needs to maintain an access link (access link, AL) between the IAB node and the terminal. As shown in FIG. 16, a link between the IAB node 4 and the terminal 1 or a terminal 2 includes an AL. A BL is included between the IAB node 4 and an IAB node 2 or an IAB node 3. Transmission of an uplink data packet sent by the terminal to the donor base station may be performed through one or more IAB nodes. In other words, a target node of uplink data between the terminal and the donor base station may be the donor base station. A downlink data packet sent by the donor base station to the terminal may be sent to an access IAB node of the terminal through one or more IAB nodes, and then sent by the access IAB node to the terminal. In other words, a target node of downlink data between the terminal and the donor base station may be the access IAB node. It may be understood that, in the IAB network, one transmission path between the terminal and the donor base station may include one or more IAB nodes. Each IAB node needs to maintain a wireless backhaul link (backhaul link, BL) orienting to a parent node. If a child node of the IAB node is a terminal, a radio access link (access link, AL) exists between the IAB node and the terminal. As shown in FIG. 16, on a path 1 between the terminal device 1 and the donor base station, the terminal 1 accesses the IAB node 4 through an AL, the IAB node 4 is connected to the IAB node 3 through a BL, the IAB node 3 is connected to an IAB node 1 through a BL, and the IAB node 1 is connected to the donor base station through a BL.

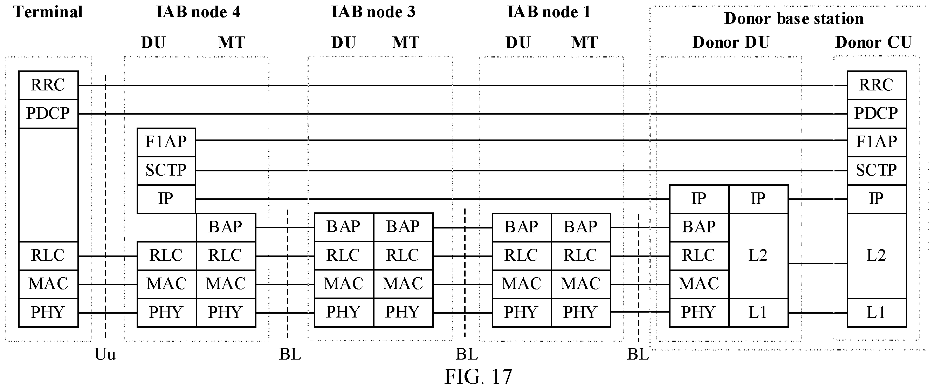

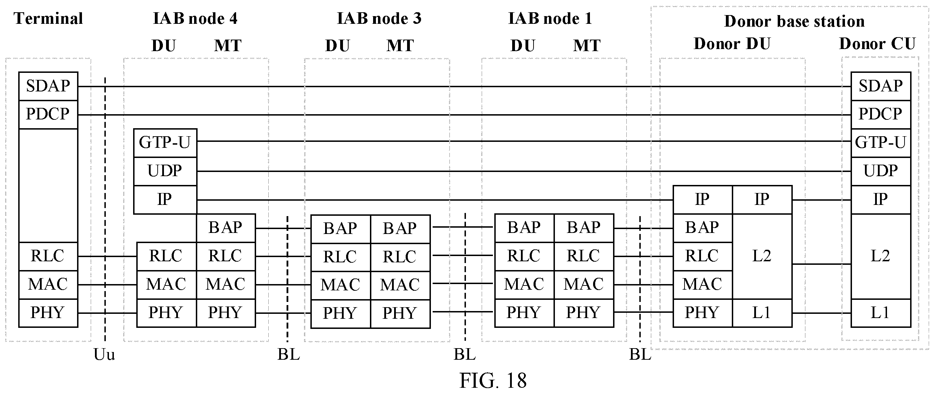

FIG. 17 and FIG. 18 are respectively a diagram of a control plane protocol stack in an IAB network and a diagram of a user plane protocol stack in the IAB network according to embodiments of this application. A donor base station in FIG. 17 and FIG. 18 may include a donor CU function and a donor DU function (in this case, the donor base station is one entity), or may include a donor CU entity and a donor DU entity (in this case, the donor base station is divided into two entities). As shown in FIG. 17 or FIG. 18, peer protocol layers between a donor DU and a donor CU include an IP layer, a layer 2 (layer 2, L2), and a layer 1 (layer 1, L1). The L1 and the L2 may be protocol stack layers in a wired transmission (for example, optical fiber transmission) network. For example, the L1 may be a physical layer, and the L2 may be a data link layer. Backhaul links (BLs) are set up between an IAB node 4 and an IAB node 3, between the IAB node 3 and an IAB node 1, and between the IAB node 1 and the donor DU. Peer protocol stacks at two ends of the BL may include a backhaul adaptation protocol (backhaul adaptation protocol, BAP) layer, a radio link control (radio link control, RLC) layer, a media access control (media access control, MAC) layer, and a physical (physical, PHY) layer.

As shown in FIG. 17, there is an interface between a terminal and the donor base station, and sometimes the interface is referred to as an air interface. For example, the interface may be referred to as a Uu interface. One end of the Uu interface is located at the terminal, and the other end of the Uu interface is located at the donor base station. Peer control plane protocol stacks at the two ends of the Uu interface include a radio resource control (radio resource control, RRC) layer, a packet data convergence protocol (packet data convergence protocol, PDCP) layer, an RLC layer, a MAC layer, and a PHY layer. A protocol layer included in a control plane protocol stack of the Uu interface may also be referred to as a control plane access stratum (access stratum, AS). If the donor base station includes a donor CU entity and a donor DU entity, control plane protocol stacks that are of the Uu interface and that are at the donor base station end may be respectively located at the donor DU and the donor CU. For example, the PHY layer, the MAC layer, and the RLC layer are located at the donor DU, and the RRC layer and the PDCP layer are located at the donor CU.

There is an interface between a DU of an IAB node (namely, the IAB node 4 in FIG. 16) accessed by the terminal and a donor base station. For example, the interface is referred to as an F1 interface. One end of the F1 interface is located at the IAB node 4, and the other end of the F1 interface is located at the donor base station. A peer end of an F1 interface of the donor base station (for example, may be the donor CU) is the IAB node (which may be specifically the DU of the IAB node), and a peer end of an F1 interface of the IAB node (which may be specifically the DU of the IAB node) is the donor base station (which may be specifically the donor CU). Peer control plane protocol stacks at the two ends of the F1 interface include an F1 application protocol (F1 application protocol, F1AP) layer, a stream control transmission protocol (stream control transmission protocol, SCTP) layer, and an IP layer. The donor base station may include a donor CU entity and a donor DU entity. Control plane protocol stacks of the F1 interface at the donor base station end may be located at the donor CU. For example, the donor CU includes the F1AP layer, the SCTP layer, and the IP layer. Control plane protocol stacks of the F1 interface at the donor base station end may alternatively be respectively located at the donor CU and the donor DU. For example, the donor CU includes the F1AP layer and the SCTP layer, and the donor DU includes the IP layer. As shown in FIG. 18, peer user plane protocol stacks at two ends of a Uu interface between a terminal and the donor base station include a service data adaptation protocol (service data adaptation protocol, SDAP) layer, a PDCP layer, an RLC layer, a MAC layer, and a PHY layer. A protocol layer included in a user plane protocol stack of the Uu interface may also be referred to as a user plane access stratum (AS). If the donor base station includes a donor CU entity and a donor DU entity, user plane protocol stacks that are of the Uu interface and that are at the donor base station end may be respectively located at the donor DU and the donor CU. For example, the PHY layer, the MAC layer, and the RLC layer are located at the donor DU, and the SDAP layer and the PDCP layer are located at the donor CU.

Peer user plane protocol layers at two ends of an F1 interface between the DU of the IAB node 4 and the donor base station include a general packet radio service tunneling protocol for the user plane (general packet radio service tunneling protocol for the user plane, GTP-U) layer, a user datagram protocol (user datagram protocol, UDP) layer, and an IP layer. The donor base station may include a donor CU entity and a donor DU entity. User plane protocol stacks of the F1 interface at the donor base station end may be located at the donor CU. For example, the donor CU includes the GTP-U layer, the UDP layer, and the IP layer. User plane protocol stacks of the F1 interface at the donor base station end may alternatively be respectively located at the donor CU and the donor DU. For example, the donor CU includes the GTP-U layer and the UDP layer, and the donor DU includes the IP layer.

When the terminal refers to an MT function or an MT entity of an IAB node or an IAB node plays a terminal role, a protocol stack of the terminal shown in FIG. 17 or FIG. 18 is a protocol stack of an MT function or an MT entity of an IAB node, or is a protocol stack of an IAB node playing a terminal role. When accessing the IAB network, an IAB node may play a terminal role. In this case, an MT of the IAB node has a protocol stack of a terminal. There is a protocol stack of an air interface (Uu interface) between the IAB node and the donor base station. The protocol stack of the terminal in FIG. 17 and FIG. 18 include the RRC layer or the SDAP layer, the PDCP layer, the RLC layer, the MAC layer, and the PHY layer. On the control plane, an RRC message of the IAB node is encapsulated in an F1AP message by the parent node of the IAB node for transmission. On the user plane, a data packet of the IAB node is encapsulated in a PDCP protocol data unit (protocol data unit, PDU) and sent to the parent node of the IAB node. The parent node of the IAB node encapsulates the received PDCP PDU in a GTP-U tunnel on the F1 interface between the parent node of the IAB node and the donor CU for transmission. In addition, after the IAB node accesses the IAB network, the IAB node may still play a role of a common terminal. For example, transmission of data packets of the IAB node may be performed between the IAB node and the donor base station. For example, the data packets include an operation, administration and maintenance (operation, administration and maintenance, OAM) network element data packet, a measurement report, and the like.

It should be noted that one IAB node may play one or more roles in the IAB network. For example, the IAB node may play a terminal role, or may play an access IAB node role (for example, a protocol stack of the IAB node 4 in FIG. 17 and FIG. 18) or an intermediate IAB node role (for example, a protocol stack of the IAB node 1 or the IAB node 3 in FIG. 17 and FIG. 18). For different roles, the IAB node may use protocol stacks corresponding to the different roles. When the IAB node plays a plurality of roles in the IAB network, the IAB node may simultaneously have a plurality of sets of protocol stacks. The plurality of sets of protocol stacks may share some same protocol layers, for example, share the same RLC layer, the same MAC layer, and the same PHY layer.

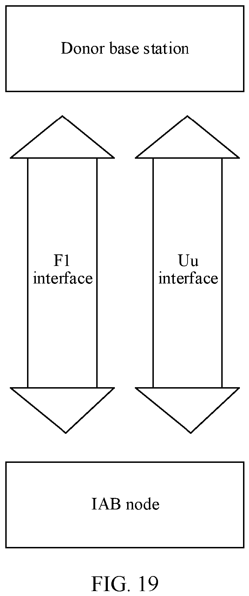

FIG. 19 is a diagram of a communication scenario. As shown in FIG. 19, a donor base station (Donor base station) and an IAB node are included. The donor base station may include a donor CU (Donor CU) and at least one donor DU (Donor DU). Communication interfaces between the donor base station and the IAB node may include an air interface (Uu interface) and an F 1 interface. For example, the air interface (Uu interface) exists between an MT of the IAB and the donor base station, and the F1 interface exists between a DU of the IAB and the donor base station.

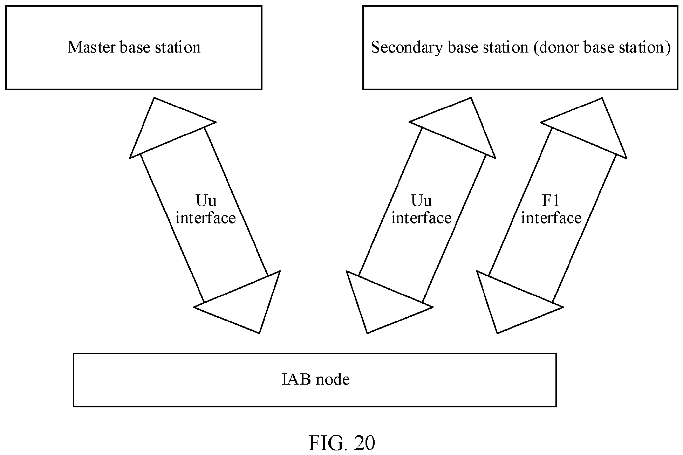

FIG. 20 is a diagram of a dual connectivity communication scenario. As shown in FIG. 20, a master base station (master base station), a secondary base station (secondary base station), and an IAB node are included. A donor base station of the IAB is the secondary base station. A communication interface between the master base station and the IAB node includes an air interface (Uu interface). Communication interfaces between the secondary base station and the IAB node include a Uu interface and an F1 interface.

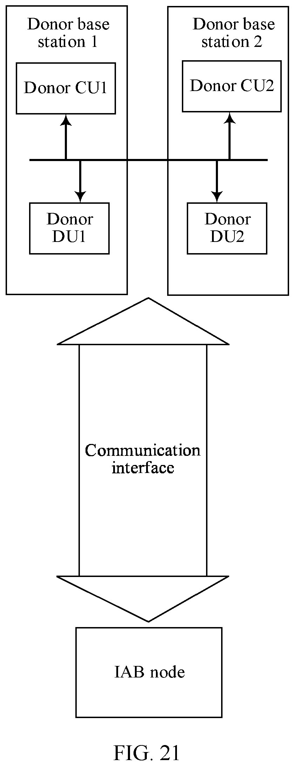

FIG. 21 is a diagram of an IAB dual connectivity communication architecture. As shown in FIG. 21, a donor base station 1 includes a donor CU1 (Donor CU1) and a donor DU1 (Donor DU1). A donor base station 2 includes a donor CU2 (Donor CU2) and a donor DU2 (Donor DU2). There is a communication interface between an IAB node and the donor base station 1 or the donor base station 2. For example, the communication interface between the IAB node and the donor base station 1 or the donor base station 2 may include a Uu interface and/or an F1 interface. There is also a communication interface between the donor base station 1 and the donor base station 2. The donor CU1 and the donor CU2 may communicate with each other, for example, communicate through an X2 or Xn interface. The donor CU1 and the donor DU2, and the donor CU2 and the donor DU1 may also communicate with each other, for example, over an IP network. It may be understood that, the communication architecture shown in FIG. 21 may further include a downstream node or a descendant node of the IAB node. There may further be an upstream node of the IAB node between the IAB node and the donor base station.

In this application, a dual connectivity IAB node indicates that the IAB node simultaneously accesses two parent nodes in a dual connectivity form. One of the two parent nodes serves as a master node (Master Node, MN) of the IAB node, and the other parent node serves as a secondary node (Secondary Node, SN) of the IAB node. A cell group (Cell Group, CG) configured on an MN side is a master cell group (Master Cell Group, MCG), and a cell group configured on an SN side is a secondary cell group (Secondary Cell Group, SCG). In other words, the IAB node is served by the MCG and the SCG. A dual connectivity scenario may include but is not limited to a general NR DC scenario shown in FIG. 21 and a CP-UP split scenario (CP-UP split scenario) in a DC scenario.

In this application, CP-UP splitting indicates that an F1-C (F 1 interface control plane) service and an F 1-U (F 1 interface user plane) service that are of the dual connectivity IAB node do not arrive at an IAB donor through a same path. The F1 interface user plane (F 1-U) service is encapsulated by an IAB-MT in a BAP layer data packet. Then, according to a BAP layer route and a BH RLC channel mapping protocol, the F1-U service arrives at the IAB donor through BH multi-hop forwarding (passing through a plurality of intermediate IAB nodes). This transmission manner may be referred to as "F1 over BAP". In a common CP-UP non-split DC scenario, the F1 over BAP is also applicable to an F1-C service. The F1 interface control plane (F1-C) service is encapsulated by the IAB-MT in an RRC message of the IAB-MT, arrives at the MN or the SN through a Uu interface between the IAB-MT and a non-F1 terminating node (namely, the non-F1 terminating node), and then arrives at the IAB donor through an inter-base-station Xn interface. This transmission manner may be referred to as "F1 over RRC". The F1 over RRC is applicable only to the F1-C service.

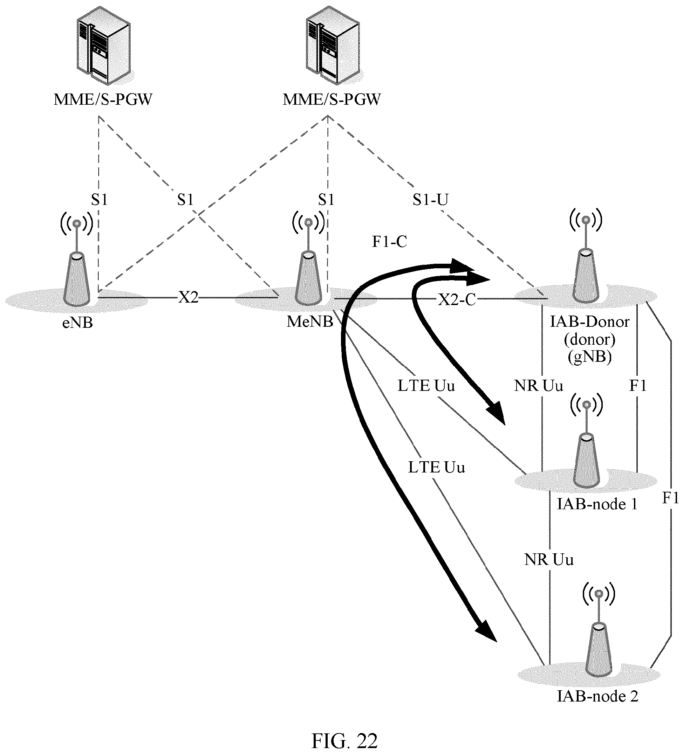

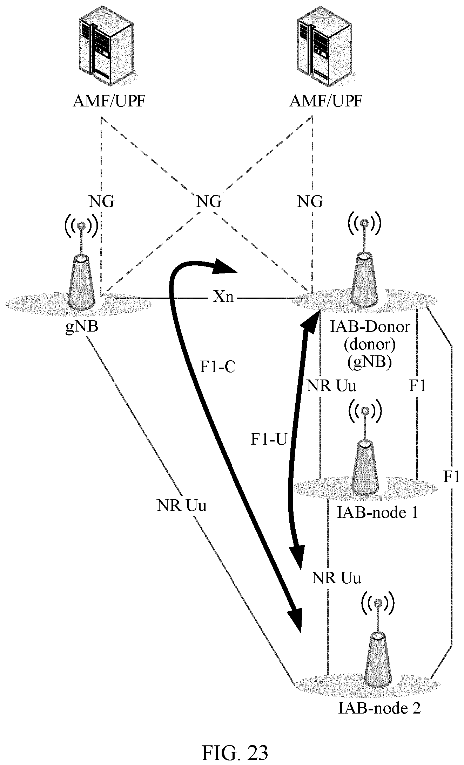

A DC scenario of an IAB in FIG. 22 and FIG. 23 is used as an example. FIG. 22 is a diagram of a CP-UP split scenario in an EN DC scenario according to an embodiment of this application. FIG. 23 is a diagram of a CP-UP split scenario in an NR DC scenario according to an embodiment of this application.

As shown in FIG. 22, an IAB node (for example, an IAB node 2 or an IAB node 1 in FIG. 22) supports 4G and 5G network dual connectivity, namely, an EN DC (E-UTRAN NR Dual Connectivity) mode. An LTE base station eNB is a master base station (Master eNB, MeNB), provides an LTE air interface (LTE Uu) connection for the IAB node, and sets up an S1 interface with a 4G evolved packet core (Evolved Packet Core, EPC) network to perform user plane and control plane transmission. A CG on an LTE side is an MCG. An IAB-donor (gNB) is a secondary base station, provides an NR air interface (NR Uu) connection for the IAB node, and sets up an S1 interface with the core network EPC to perform user plane transmission. A CG on an NR side is an SCG. An F1-C service (shown in FIG. 22) and an F1-U service of an IAB node (for example, the IAB node 2 or the IAB node 1 in FIG. 22) respectively arrive at the IAB donor (gNB) through different paths.

As shown in FIG. 23, an IAB node 2 sets up a connection to a network only through an air interface in a new radio (New Radio, NR) standard. To be specific, the IAB node 2 is simultaneously connected to two parent nodes (in this application, the parent node may also include a donor node) in an NR DC form. The two parent nodes may respectively serve as a master node (Master Node, MN) or a secondary node (Secondary Node, SN) of the IAB node 2. A CG configured on an MN side is an MCG, and a CG configured on an SN side is an SCG. An F1-C service and an F1-U service of the IAB node 2 respectively arrive at an IAB donor (SgNB) through different paths.

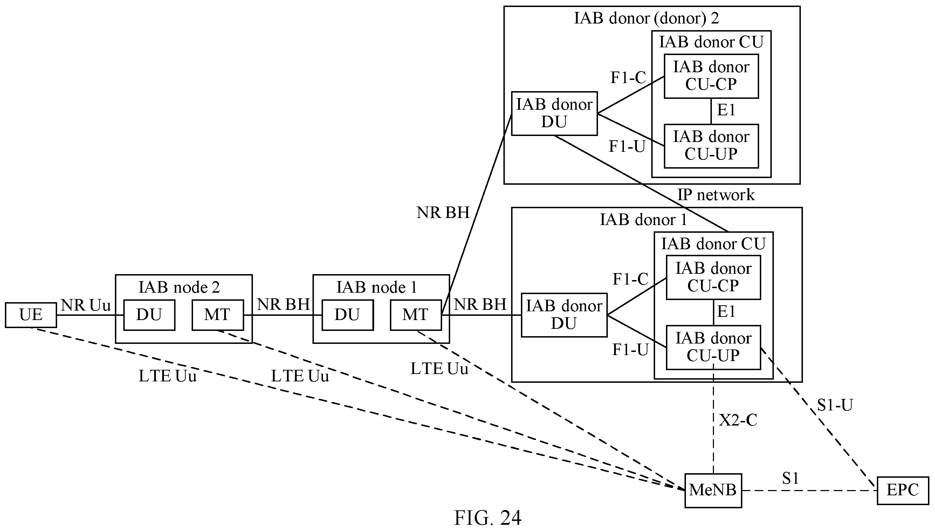

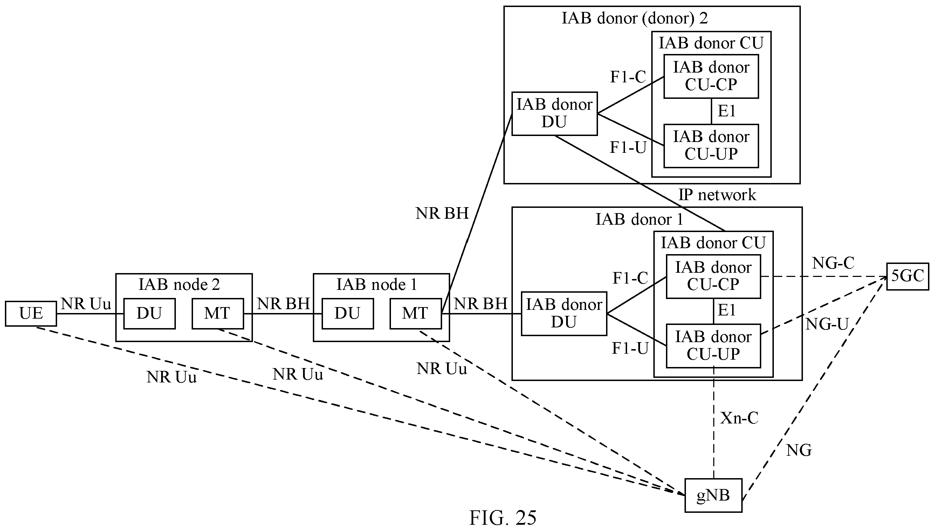

It is considered that an inter-base-station coordination transmission manner not only includes the CA and the m-TRP described in the foregoing embodiments, but also includes the foregoing IAB dual connectivity mode, to be specific, the IAB communicates with two base stations by setting up a dual connectivity mode. Therefore, the method in this embodiment of this application may be further applied to an IAB network communication system using DC networking, for example, an IAB network communication system using EN DC networking shown in FIG. 24 or an IAB network communication system using NR DC networking shown in FIG. 25.

For example, FIG. 24 is a diagram of an IAB network communication system using EN DC networking according to this application. As shown in FIG. 24, the IAB network communication system may include a UE, an IAB node 1 (IAB node 1), an IAB node 2 (IAB node 2), an MeNB, an IAB donor 1, an IAB donor 2, and an EPC. The UE may communicate with the IAB donor 1 or the IAB donor 2 through the IAB node 2 and the IAB node 1. The IAB node 2 is configured to provide access and backhaul services for the UE. The IAB node 2 may include an IAB node DU (IAB-DU for short) and an IAB node MT (IAB-MT for short). The IAB node 1 is configured to provide access and backhaul services for a child node (namely, the IAB node 2). The IAB node 1 may also include an IAB node DU (IAB-DU for short) and an IAB node MT (IAB-MT for short). The IAB-DU is a distributed unit part of an IAB node (for example, the IAB node 1 or the IAB node 2 herein), has a function similar to that of a gNB-DU, sets up an F1 interface with an IAB-donor-CU, and is configured to provide an access service for a child node of the IAB-DU or the UE.

The IAB-MT is a mobile termination part of an IAB node (for example, the IAB node 1 or the IAB node 2 herein), has a function of the UE, and is configured to provide a data backhaul service for a child node of the IAB-MT or the UE.

An IAB donor (the IAB donor 1 or the IAB donor 2 herein) is a donor base station that supports an IAB node, and may include an IAB-donor-CU and at least one IAB-donor-DU. The IAB-donor-CU may include one IAB-donor-CU-CP (responsible for a control plane service) and at least one IAB-donor-CU-UP (responsible for a user plane service).

The IAB-donor-DU is a distributed unit part of an IAB donor (the IAB donor 1 or the IAB donor 2 herein), has a function similar to that of the gNB-DU, and mainly implements functions of L1 and L2 protocol stacks, including functions of a PHY layer, a MAC layer, and an RLC layer.

The IAB-donor-CU is a central unit part of an IAB donor (the IAB donor 1 or the IAB donor 2 herein), has a function similar to that of the gNB-CU, and mainly implements functions of a PDCP layer, an SDAP layer, and an RRC layer. An F1-C interface is set up between the IAB-donor-CU-CP and the IAB-DU, and an F1-U interface is set up between the IAB-donor-CU-UP and the IAB-DU.

The MeNB is an LTE standard base station in an EN DC networking mode, where for the UE or an IAB node (the IAB node 1 or the IAB node 2 herein), the base station is a master base station (Master eNB, MeNB).

BH is a backhaul link, for example, NR BH shown in FIG. 24, is specifically a connection channel between an MT part of an IAB node (the IAB node 1 or the IAB node 2 herein) and a DU part of a parent node of the IAB node, and is used to backhaul a UE data packet or forward a data packet of an IAB donor.

As shown in FIG. 24, an IAB node (the IAB node 1 or the IAB node 2 herein) supports 4G and 5G network dual connectivity, namely, an EN DC mode. An LTE base station eNB is an MeNB, provides an LTE air interface (LTE Uu) connection for the IAB node, and sets up an S 1 interface with the EPC to perform user plane and control plane transmission. A CG on an LTE side is an MCG. An NR base station gNB is a secondary base station, provides an NR air interface (NR Uu) connection for the IAB node, and sets up an S 1 interface with the core network EPC to perform user plane transmission. A CG on an NR side is an SCG. Similarly, the UE also supports the EN DC. The UE is connected to the master base station eNB through the LTE Uu interface, and is connected to the secondary base station IAB node 2 through the NR Uu interface. In some embodiments, the secondary base station of the UE may alternatively be the IAB donor 1 or the IAB donor 2. As shown in FIG. 24, an EN DC scenario of an IAB network may also support multi-hop IAB networking. In other words, the IAB node may be connected to the IAB donor 1 or the IAB donor 2 through a multi-hop wireless backhaul link.

Optionally, the EN DC scenario of the IAB network may include a CP-UP split scenario and a CP-UP non-split scenario. For the CP-UP split scenario in the EN DC scenario, an F1-C service of an IAB node (the IAB node 1 or the IAB node 2 herein) may arrive at a non-F 1 interface terminating node (non-F 1 terminating node, namely, an MeNB) through an LTE Uu interface channel. Then, the non-F 1 interface terminating node sends the F1-C service to an IAB donor (the IAB donor 1 or IAB donor 2 herein) through an inter-base-station interface X2, where the IAB donor may be referred to as an F1 interface terminating donor node (F 1-terminating donor node) of the IAB node. An F 1-U service of an IAB node (the IAB node 1 or the IAB node 2 herein) arrives at an IAB donor (the IAB donor 1 or the IAB donor 2 herein) through BH multi-hop forwarding by the IAB node according to a BAP layer protocol.

It should be noted that the communication system architecture shown in FIG. 24 is described by using two IAB nodes as an example. The communication system architecture may include more IAB nodes, for example, three, four, or more IAB nodes, or may include fewer IAB nodes, for example, one IAB node. This application is not limited to the system architecture shown in FIG. 24.

FIG. 25 is a diagram of an IAB network communication system using NR DC networking according to this application. As shown in FIG. 25, the IAB network communication system may include a UE, an IAB node 1 (IAB node 1), an IAB node 2 (IAB node 2), a gNB, an IAB donor 1, an IAB donor 2, and a 5GC.

For descriptions of the UE, IAB node 1, IAB node 2, IAB-DU, IAB-MT, IAB donor, IAB-donor-DU and IAB-donor-CU, refer to the related descriptions in FIG. 24. Details are not described herein again.

The gNB is a 5G standard base station. For the UE or an IAB node (the IAB node 1 or the IAB node 2 herein), the gNB may be a master station (namely, an MN or an MgNB) or a secondary station (namely, an SN or an SgNB) of the UE or the IAB node in a DC mode.

Different from the IAB network communication system in the EN DC networking shown in FIG. 24, in the IAB network communication system shown in FIG. 25, both the IAB node and the UE set up a connection to a network only through an NR standard air interface. In an NR DC form, the IAB node 2 is simultaneously connected to two parent nodes: the IAB node 1 and the gNB. The two parent nodes may respectively serve as an MN or an SN of the IAB node 2. A CG configured on an MN side is an MCG, and a CG configured on an SN side is an SCG.

Optionally, the NR DC scenario of the IAB network may include a CP-UP split scenario and a CP-UP non-split scenario. For the CP-UP split scenario in the NR DC scenario, an F1-C service of an IAB node (the IAB node 1 or the IAB node 2 herein) may arrive at a non-F 1 interface terminating node through an NR Uu interface channel. Then, the non-F 1 interface terminating node sends the F1-C service to an IAB donor (the IAB donor 1 or IAB donor 2 herein) through an inter-base-station interface Xn, where the IAB donor may be referred to as an F1 interface terminating node (F1-terminating node) of the IAB node. An F 1-U service of an IAB node (the IAB node 1 or the IAB node 2 herein) arrives at an IAB donor (the IAB donor 1 or the IAB donor 2 herein) through BH multi-hop forwarding by the IAB node according to a BAP layer protocol.

In the NR DC networking, the non-F 1 interface terminating node may be the MgNB, and an F1 interface terminating donor node may be the SgNB. Alternatively, the non-F 1 interface terminating node may be the SgNB, and the F1 interface terminating node may be the MgNB.

It should be noted that the communication system architecture shown in FIG. 25 is described by using two IAB nodes as an example. The communication system architecture may include more IAB nodes, for example, three, four, or more IAB nodes, or may include fewer IAB nodes, for example, one IAB node. This application is not limited to the system architecture shown in FIG. 25.

It should be further noted that a name of the F1 interface is merely an example, and does not constitute a limitation on a function of the F1 interface. In a 5G network and another future network, the F1 interface may alternatively have another name. This is not specifically limited in embodiments of this application. In addition, it should be understood that, names of messages (or signaling) whose transmission is performed between the foregoing network elements are merely examples, and do not constitute any limitation on functions of the messages.

According to the current 3GPP TS 38.331, when an IAB node is added, as a mobile termination MT, to a topology process managed by a donor node, or when an IAB node already integrated in a topology needs to update an original BAP configuration, a network device eNB (limited to be in an EN DC mode) or a gNB (in a single-connectivity mode or an NR DC mode) sends an RRC reconfiguration (RRCReconfiguration) message or an RRC connection reconfiguration (RRCConnectionReconfiguration) message to the IAB node. A bap-Config field (field) included in configuration information carries information used to configure a BAP entity of the IAB node and a corresponding function, namely, BAP configuration information. Further, when the bap-Config field is set to setup (setup), an IAB-MT performs a specific BAP configuration process based on information element content included in the bap-Config field. When the bap-Config field is set to release (release), an IAB-MT releases the BAP entity, and a currently configured BAP configuration is also released. The IAB node has a unique BAP entity in a DU part or an MT part of the IAB node. In addition, in the NR DC mode, the BAP entity of the IAB may perform different BAP routing and bearer mapping functions based on bap-Config information configured by the MCG and the SCG respectively.

In addition, in the EN DC or NR DC dual connectivity mode, processes such as a secondary node change or handover and a secondary cell group link failure may occur on the IAB node. Therefore, the IAB node releases the secondary node and a BAP configuration associated with the secondary node. This process is referred to as a multi-radio access technology (Multi-Radio Access Technology) dual connectivity release (MR DC release, including EN DC release and NR DC release) process of the IAB node. An endc-ReleaseAndAdd field carried in the RRC connection reconfiguration (RRCConnectionReconfiguration) message sent by the master node eNB to the IAB node indicates to initiate the process, or an nrdc-ReleaseAndAdd field in the RRC reconfiguration (RRCReconfiguration) message sent by the master node gNB to the IAB node indicates to initiate the process. According to the current 3GPP TS 38.331 standard, when the IAB node receives, in a DC mode, indication information from the master node and performs the MR DC release process, the IAB-MT releases the BAP configuration bap-Config associated with the SCG.

However, the existing standard does not specify a scenario or condition in which the IAB node should release the BAP entity. This may cause: The IAB node releases the BAP entity improperly in the NR DC mode, and the IAB node retains the BAP entity improperly in the EN DC mode. For example, in the common NR DC mode, the IAB-MT may need to release a bap-Config configuration of only one CG. According to the existing standard, when the bap-Config field is set to release (release) for indication, the IAB-MT directly releases the BAP entity of the IAB-MT. As a result, a BAP configuration configured for another CG cannot run normally. In the EN DC mode, when the IAB-MT performs the MR DC release, according to the existing standard, the IAB-MT releases only the bap-Config configuration associated with the SCG. However, in this case, because the MCG is an LTE cell and has no bap-Config configuration, the IAB-MT further needs to release the BAP entity.

In this application, adding a node includes at least one of setting up a configuration and a function entity that are related to the node, setting up an interface with the node, and setting up a connection and/or a bearer on the interface with the node. For example, adding an IAB donor node includes setting up a BAP configuration and an entity that are associated with the donor. Setting up a Uu interface may include at least one of setting up an RRC connection, setting up an SRB, and setting up a DRB. Setting up an F1 interface may include setting up an F1 connection. Releasing a node includes at least one of releasing a configuration and a function entity related to the node, disconnecting an interface, and disconnecting a connection and/or a bearer on the interface. For example, releasing an IAB donor node includes releasing a BAP configuration and an entity that are associated with the donor. Disconnecting a Uu interface may include at least one of disconnecting an RRC connection, disconnecting an SRB, and disconnecting a DRB. Disconnecting an F1 interface may include disconnecting an F1 connection.

This application provides a communication method. The method includes: A first node receives a reconfiguration message from a network device, where the reconfiguration message is a radio resource control RRC reconfiguration message or an RRC connection reconfiguration message. The first node releases a backhaul adaptation protocol (backhaul adaptation protocol, BAP) entity of the first node based on the reconfiguration message. According to the foregoing method, when the first node serves as an IAB node, the first node may release the BAP entity of the first node based on the RRC message sent by the network device.

In a possible implementation, the reconfiguration message (which may be specifically: a BAP configuration (bap-Config) field included in the reconfiguration message is set to release (release)) indicates to release a BAP configuration of the first node, and a unique successfully configured BAP configuration only exists on the first node. According to the foregoing method, the first node serves as an IAB node. Once the first node releases the unique BAP configuration of the first node, the first node may no longer retain the BAP entity of the first node.

In a possible implementation, the reconfiguration message (which may be specifically an EN DC release and add (endc-ReleaseAndAdd) field included in the reconfiguration message) indicates the first node to perform a multi-RAT dual connectivity release (MR DC release) process, where the first node is in an evolved universal terrestrial radio access E-UTRA standard and new radio NR standard dual connectivity (EN DC) mode. Before the first node releases the backhaul adaptation protocol (backhaul adaptation protocol, BAP) entity of the first node based on the reconfiguration message, a BAP configuration associated with a secondary cell group SCG is already released. According to the foregoing method, the first node serves as an IAB node in the EN DC mode. When releasing the BAP configuration associated with the SCG, because the BAP configuration associated with the SCG is the unique BAP configuration that exists on the IAB node, the IAB node also releases the BAP entity of the IAB node.

In a possible implementation, the reconfiguration message (which may be specifically an MR DC release and add mrdcReleaseAndAdd field included in the reconfiguration message) indicates the first node to perform a multi-RAT dual connectivity release (MR DC release) process, where the first node is in a new radio standard dual connectivity (NR DC) mode. Before the first node releases the backhaul adaptation protocol (backhaul adaptation protocol, BAP) entity of the first node based on the reconfiguration message, the BAP configuration associated with the secondary cell group SCG is already released, where the BAP configuration is a last successfully configured BAP configuration that only exists on the first node. According to the foregoing method, the first node serves as an IAB node in the NR DC mode. When releasing the BAP configuration associated with the SCG, if the BAP configuration associated with the SCG is the unique or the last BAP configuration that exists on the IAB node, the IAB node releases the BAP configuration and the BAP entity of the IAB node.

In a possible implementation, the reconfiguration message (which may be specifically an MR DC release and add (mrdc-ReleaseAndAdd) field included in the reconfiguration message) indicates the IAB node to perform a multi-RAT dual connectivity MR DC release process, where the IAB node is in an NR DC mode in an F1 interface control plane and F1 interface user plane split scenario. In addition, a secondary node SN is an F1 interface terminating donor node of the IAB node, and a master node MN is a non-F 1 interface terminating node of the IAB node, where the IAB node is in an NR DC mode. Before the first node releases the backhaul adaptation protocol (backhaul adaptation protocol, BAP) entity of the first node based on the reconfiguration message, the BAP configuration associated with the secondary cell group SCG is already released, where the BAP configuration is a unique successfully configured BAP configuration that only exists on the IAB node. According to the foregoing method, the first node serves as an IAB node in the NR DC mode in the F1 interface control plane and F1 interface user plane split scenario. When releasing the BAP configuration associated with the SCG, because the BAP configuration associated with the SCG is the unique BAP configuration that exists on the IAB node, the IAB node releases the BAP configuration and the BAP entity of the IAB node.

In a possible implementation, the first node is an integrated access and backhaul (integrated access and backhaul, IAB) node or a mobile termination part of an IAB node (IAB-MT). According to the foregoing method, the IAB node or the IAB-MT may release the BAP configuration and the BAP entity of the IAB node or the IAB-MT based on the indication information from the network device.

In a possible implementation, the network device may be an IAB donor base station, an NR standard base station gNB, or an LTE standard base station eNB. The NR standard base station gNB may be a master node MN in the NR DC mode, and the LTE standard base station eNB may be a master node eNB in the EN DC mode. According to the foregoing method, the IAB donor base station, the master node MN in the NR DC mode, or the master node MeNB in the EN DC mode may send the RRC reconfiguration message to the first node, to indicate the first node to release the BAP configuration and the BAP entity of the first node.

This application provides a communication method. The method includes: A first node receives a reconfiguration message from a network device, where the reconfiguration message (including an MR DC release and add (mrdc-ReleaseAndAdd) field) indicates the first node to perform a multi-RAT dual connectivity release (MR DC release) process, and the reconfiguration message is a radio resource control RRC reconfiguration message. The first node is in a new radio standard dual connectivity (NR DC) mode in an F1 interface control plane and F1 interface user plane non-split scenario, and a first backhaul adaptation protocol (backhaul adaptation protocol, BAP) configuration and a second BAP configuration exist on the first node, where the first BAP configuration is associated with a secondary cell group SCG, and the second BAP configuration is associated with a master cell group MCG. The first node releases the first BAP configuration based on the reconfiguration message, and forbids releasing a BAP entity of the first node. According to the foregoing method, the first node serves as an IAB node in the NR DC mode in the F1 interface control plane and F1 interface user plane non-split scenario. When only the BAP configuration associated with the SCG is released, the IAB node still retains the BAP entity of the IAB node, to perform the BAP configuration associated with the MCG.

In a possible implementation, the first node is an integrated access and backhaul (integrated access and backhaul, IAB) node or a mobile termination part of an IAB node IAB-MT. According to the foregoing method, the IAB node or the IAB-MT may release a BAP configuration of the IAB node or the IAB-MT based on indication information from the network device, and retain a BAP entity of the IAB node or the IAB-MT simultaneously.

In a possible implementation, the network device may be an IAB donor base station, an NR standard base station gNB, or an LTE standard base station eNB. The NR standard base station gNB may be a master node MN in the NR DC mode, and the LTE standard base station eNB may be a master node eNB in the EN DC mode. According to the foregoing method, the IAB donor base station, the master node MN in the NR DC mode, or the master node MeNB in the EN DC mode may send the RRC reconfiguration message to the first node, to indicate the first node to release the BAP configuration and the BAP entity of the first node.

The following provides, according to an embodiment of this application, a specific method for determining, by the IAB node, whether to release the BAP entity of the IAB node.

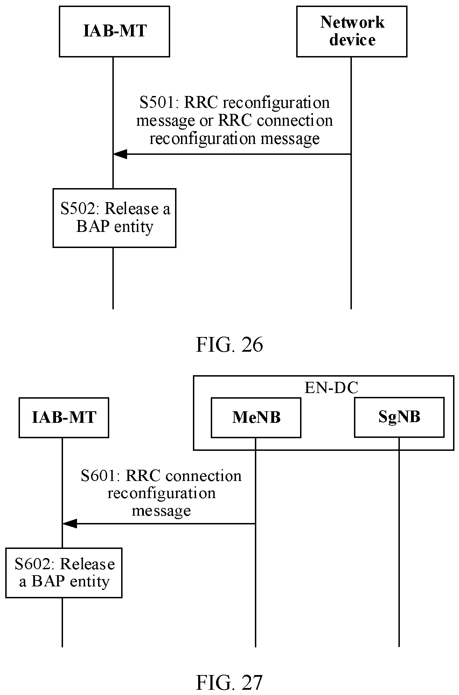

S501: As shown in FIG. 26, an IAB-MT receives an RRC reconfiguration message (RRCReconfiguration) or an RRC connection reconfiguration message (RRCConnectionReconfiguration) from a network device. The network device may be an IAB donor, a 5G base station gNB, or an LTE base station eNB in this application. The gNB may be a master node gNB of an IAB in an NR DC mode, and the eNB may be a master node eNB of an IAB in an EN DC mode.

S502: If a bap-Config field (field) included in the RRC reconfiguration message or the RRC connection reconfiguration message is set to "release" ("release"), and there is only a unique configured backhaul adaptation protocol BAP configuration (namely, bap-Config) on the IAB node, the IAB-MT releases a BAP entity of the IAB node. The unique configured bap-Config is equal to a last configured bap-Config on the IAB node. The last configured bap-Config on the IAB node includes a last configured BAP configuration bap-Config that only exists on the IAB node after the IAB node receives a plurality of BAP configurations. The unique configured bap-Config completely corresponds to functions of the BAP entity of the IAB node.

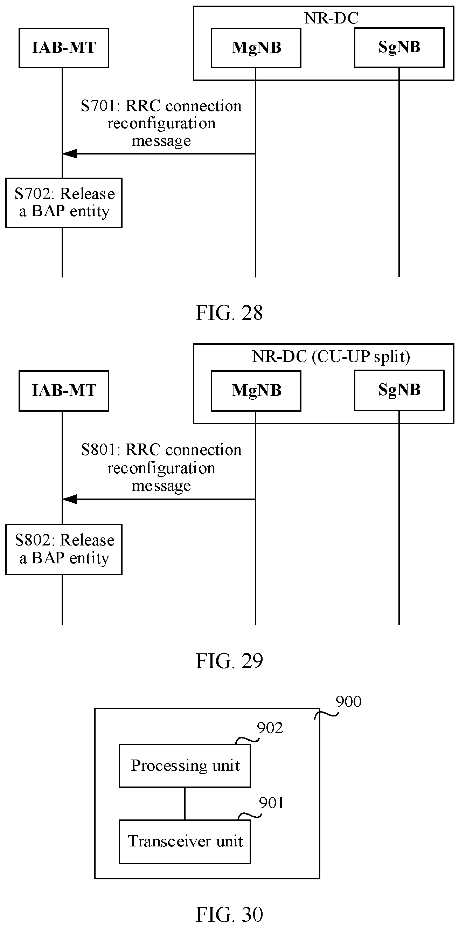

As shown in FIG. 27, for step S601, refer to the descriptions of step S501. Step S502 may be replaced with step S602: An IAB-MT initiates an MR DC release process based on indication information (for example, an endc-ReleaseAndAdd field) included in an RRC reconfiguration message received from a network device MeNB. If an IAB node is in an EN DC mode (as shown in FIG. 22 or FIG. 24), the IAB-MT not only releases a BAP configuration bap-Config associated with an SCG, but also releases a BAP entity of the IAB node. The EN DC mode includes: A secondary node SgNB is an F1 interface terminating donor node (F1-terminating donor) of the IAB node, and the secondary cell group SCG is an NR cell. The BAP configuration bap-config associated with the SCG is a unique configured bap-config that exists on the IAB node, or may be a last configured bap-Config on the IAB node. The last configured bap-Config on the IAB node includes a last configured BAP configuration bap-Config that only exists on the IAB node after the IAB node receives a plurality of BAP configurations. The BAP configuration bap-Config associated with the SCG completely corresponds to functions of the BAP entity of the IAB node. As shown in FIG. 28, for step S701, refer to the descriptions of step S501. Step S502 may be replaced with step S702: An IAB-MT initiates an MR DC release process based on indication information (for example, an endc-ReleaseAndAdd field) included in an RRC reconfiguration message received from a network device MgNB. If an IAB node is in an NR DC mode, and a BAP configuration bap-Config associated with an SCG is a last configured BAP configuration bap-Config that exists on the IAB node, the IAB-MT not only releases the BAP configuration bap-Config associated with the SCG, but also releases a BAP entity of the IAB node. The last configured bap-Config that exists on the IAB node includes a last configured bap-Config that only exists on the IAB node after the IAB node receives a plurality of BAP configurations. The last configured bap-Config that exists on the IAB node completely corresponds to functions of the BAP entity of the IAB node.

As shown in FIG. 29, for step S801, refer to the descriptions of step S501. Step S502 may be replaced with step S802: An IAB-MT performs an MR DC release process based on indication information (for example, an mrdc-ReleaseAndAdd field) in an RRC reconfiguration message received from a network device MgNB. If an IAB node is in an NR DC mode in an F1 interface CP-UP split scenario (as shown in FIG. 23 or FIG. 25), a secondary node SN is an F1 interface terminating donor node of the IAB node, and a master node MN or an MgNB is a non-F1 interface terminating node (non-F1-terminating node) of the IAB node, the IAB-MT not only releases a BAP configuration bap-Config associated with an SCG, but also releases a BAP entity of the IAB node. The BAP configuration bap-config associated with the SCG is a unique configured bap-Config that exists on the IAB node, or may be a last configured bap-Config on the IAB node. The last configured bap-Config on the IAB node includes a last configured BAP configuration bap-Config that only exists on the IAB node after the IAB node receives a plurality of BAP configurations. The BAP configuration bap-Config associated with the SCG completely corresponds to functions of the BAP entity of the IAB node.

In another implementation, an IAB-MT performs an MR DC release process based on indication information (for example, an mrdc-ReleaseAndAdd field) in an RRC reconfiguration message from a network device MgNB. If an IAB node is in an F1 interface CP-UP non-split NR DC mode (as shown in FIG. 21), and there are two configured BAP configurations bap-Configs (which are respectively associated with an SCG and an MCG) on the IAB node, the IAB-MT releases only a BAP configuration bap-Config associated with the SCG, and does not release a BAP entity of the IAB-MT. The two configured BAP configurations bap-Configs (which are respectively associated with the SCG and the MCG) are both used to configure functions of the BAP entity of the IAB node.

In the foregoing embodiments provided in this application, the methods provided in embodiments of this application are separately described from perspectives of interaction between devices such as the CU, the first DU, the second DU, and the terminal, and interaction between devices such as the first node and the network device. To implement functions in the methods provided in embodiments of this application, devices such as the CU, the first DU, the second DU, the terminal, the first node, and the network device each may include a hardware structure and a software module, and implement the foregoing functions in a form of a hardware structure, a software module, or a hardware structure plus a software module. One of the foregoing various functions may be performed in a form of the hardware structure, the software module, or a combination of the hardware structure and the software module.

FIG. 30 is a diagram of a structure of a communication apparatus 900 according to an embodiment of this application. The communication apparatus 900 may correspondingly implement the functions or steps implemented by devices such as the CU, the first DU, the second DU, the terminal, the first node, or the network device in the foregoing method embodiments.

The communication apparatus 900 may include a transceiver unit 901 or a processing unit 902. Optionally, a storage unit may be further included. The storage unit may be configured to store instructions (code or a program) and/or data. The transceiver unit 901 or the processing unit 902 may be coupled to the storage unit. For example, the processing unit 902 may read the instructions (the code or the program) and/or the data in the storage unit, to implement a corresponding method. The foregoing units may be independently disposed, or may be partially or completely integrated. Optionally, the transceiver unit 901 may include a sending unit or a receiving unit. The sending unit is configured to perform a sending operation, and the receiving unit is configured to perform a receiving operation.

It should be understood that the processing unit 902 may be a processor or a controller, for example, a general-purpose central processing unit (central processing unit, CPU), a general-purpose processor, digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processing unit 902 may implement or execute various example logical blocks, units, or circuits described with reference to content disclosed in this application. The processor may alternatively be a combination of processors implementing a computing function, for example, a combination of one or more microprocessors, or a combination of the DSP or a microprocessor. The transceiver unit 901 is an interface circuit of the apparatus, and is configured to receive a signal from another apparatus. For example, when the apparatus is implemented in a form of a chip, the transceiver unit 901 is an interface circuit used by the chip to receive a signal from another chip or apparatus, or is an interface circuit used by the chip to send a signal to another chip or apparatus.

The communication apparatus 900 may be the CU, the first DU, the second DU, the terminal, the first node, or the network device in the foregoing embodiments, or may be a chip used in the CU, the first DU, the second DU, the terminal, the first node, or the network device.

For example, when the communication apparatus 900 is the CU, the first DU, the second DU, the terminal, the first node, or the network device, the processing unit 902 may be, for example, a processor, and the transceiver unit 901 may be, for example, a transceiver. Optionally, the transceiver may include a radio frequency circuit or an input/output interface, and the storage unit may be, for example, a memory. For example, when the communication apparatus 900 is a chip used in the CU, the first DU, the second DU, the terminal, the first node, or the network device, the processing unit 902 may be, for example, a processor, and the transceiver unit 901 may be, for example, an input/output interface, a pin, or a circuit.

The processing unit 902 may execute computer-executable instructions stored in the storage unit. Optionally, the storage unit is a storage unit in the chip, for example, a register or a cache. Alternatively, the storage unit may be a storage unit that is in the CU, the first DU, the second DU, the terminal, the first node, or the network device and that is located outside the chip, for example, a read-only memory (read-only memory, ROM), another type of static storage device that can store static information or instructions, or a random access memory (random access memory, RAM). In some embodiments, the communication apparatus 900 can correspondingly implement behavior and functions of the first DU in the foregoing method embodiments. For example, the communication apparatus 900 may be the first DU, or may be a component (for example, a chip or a circuit) used in the first DU.

The transceiver unit 901 may be configured to support communication between the first DU and another network entity, for example, support communication between the first DU and the CU, the second DU, the terminal, and the like shown in FIG. 11 to FIG. 15. The processing unit 902 is configured to control and manage an action of the first DU. For example, the processing unit 902 is configured to support the first DU in performing an operation other than receiving and sending of the first DU in FIG. 11 to FIG. 15.

In an embodiment, the transceiver unit 901 is configured to receive data of a terminal from a central unit CU.

The processing unit 902 is configured to process the data by using a media access control MAC entity scheduling function specific to the terminal, to obtain a physical layer transmission data stream.

The transceiver unit 901 is further configured to send the physical layer transmission data stream to a second DU.

In a possible implementation, the physical layer transmission data stream is a media access control protocol data unit MAC PDU.

In a possible implementation, the processing unit 902 is specifically configured to process the data by using the media access control MAC entity scheduling function and a physical layer scheduling function that are for the terminal, to obtain the physical layer transmission data stream, where the physical layer transmission data stream is one of the following: a transport block TB, a codeword CW, and a code block CB.

In a possible implementation, the transceiver unit 901 is further configured to send physical layer transmission control information to the second DU, where the physical layer transmission control information includes one or more of the following: related parameter information of downlink control information DCI, related parameter information of the TB, CB or CW, parameter information of a modulation and coding scheme MCS, parameter information of transmit power control TPC, status parameter information of a transmission configuration indicator TCI, parameter information of a precoding matrix indication PMI, parameter information of an antenna port, related parameter information of a time-frequency location and a search space Searchspace that are of a physical downlink control channel PDCCH for the terminal in a control resource set CORESET, information about a data scrambling identifier of a physical downlink shared channel PDSCH, and information about a radio network temporary identifier RNTI.

In a possible implementation, the transceiver unit 901 is further configured to receive uplink control information UCI from the second DU, where the UCI includes one or more of the following: a buffer status report BSR, a power headroom report PHR, a timing advance TA, and a measurement reference signal measurement result.

In a possible implementation, the transceiver unit 901 is further configured to receive uplink feedback information from the second DU, where the uplink feedback information includes hybrid automatic repeat request HARQ receiving state feedback information.

In a possible implementation, the transceiver unit 901 is further configured to receive indication information from the CU, where the indication information includes an identifier of the terminal, and the indication information indicates the first DU and the second DU to perform inter-DU coordination transmission for the terminal.

It should be noted that in this embodiment, the communication apparatus may perform related steps of the first DU in the method embodiments shown in FIG. 11 to FIG. 13. For details, refer to the implementations provided in the foregoing steps. Details are not described herein again.

In another embodiment, the transceiver unit 901 is configured to perform the following operations: receiving indication information from a central unit CU, where the indication information indicates a terminal to initiate contention-free random access to a second DU; sending the indication information to the terminal; and receiving a random access message 1 Msg1 from the second DU. The processing unit 902 is configured to generate a random access message 2 Msg2 based on the Msg1.

The transceiver unit 901 is further configured to send the Msg2 to the terminal.

In a possible implementation, the indication information indicates a dedicated preamble used for the contention-free random access, and the Msg1 includes the dedicated preamble. Alternatively, the indication information indicates a dedicated random access resource used for the contention-free random access, and the transceiver unit 901 is specifically configured to receive the Msg1 from the second DU by using the dedicated random access resource. Alternatively, the indication information indicates a dedicated preamble and a dedicated random access resource, and the transceiver unit 901 is specifically configured to receive the Msg1 from the second DU by using the dedicated random access resource, where the Msg1 includes the dedicated preamble.

It should be noted that in this embodiment, the communication apparatus may perform related steps of the first DU in the method embodiment shown in FIG. 14. For details, refer to the implementations provided in the foregoing steps. Details are not described herein again.

In another embodiment, the transceiver unit 901 is configured to receive a random access message 1 Msg1 from a second DU.

The processing unit 902 is configured to generate a random access message 2 Msg2 based on the Msg1.

The transceiver unit 901 is further configured to perform the following operations: sending the Msg2 to a terminal; receiving a random access message 3 Msg3 from the second DU; sending the Msg3 to a central unit CU; receiving a Msg4 from the CU; and sending the Msg4 to the terminal. In a possible implementation, the transceiver unit 901 is further configured to perform the following operation: receiving, from the second DU, a random access radio network temporary identifier RA-RNTI value of a secondary cell, where there is a correspondence between the secondary cell and the second DU, and the RA-RNTI value is used to determine a time-frequency location of a first physical downlink control channel PDCCH for scheduling the Msg2, and a time-frequency location of a first physical downlink shared channel PDSCH for transmission of data information of the Msg2, and is used for data scrambling of the first PDCCH.

In a possible implementation, a response time window for monitoring the first PDCCH or a random access response is greater than 80 slots.

In a possible implementation, the transceiver unit 901 is specifically configured to send the Msg2 to the terminal via the second DU.

In a possible implementation, the transceiver unit 901 is specifically configured to send the Msg4 to the terminal via the second DU.

In a possible implementation, maximum duration of a timer for monitoring the Msg4 is greater than duration of 64 subframes.

It should be noted that in this embodiment, the communication apparatus may perform related steps of the first DU in the method embodiment shown in FIG. 15. For details, refer to the implementations provided in the foregoing steps. Details are not described herein again.

In some embodiments, the communication apparatus 900 can correspondingly implement behavior and functions of the second DU in the foregoing method embodiments. For example, the communication apparatus 900 may be the second DU, or may be a component (for example, a chip or a circuit) used in the second DU.

The transceiver unit 901 may be configured to support communication between the second DU and another network entity, for example, support communication between the second DU and the CU, the first DU, the terminal, and the like shown in FIG. 11 to FIG. 15. The processing unit 902 is configured to control and manage an action of the second DU. For example, the processing unit 902 is configured to support the second DU in performing an operation other than receiving and sending of the second DU in FIG. 11 to FIG. 15.

In an embodiment, the transceiver unit 901 is configured to perform the following operations: receiving a physical layer transmission data stream from a first DU; and sending the physical layer transmission data stream to a terminal.

In a possible implementation, the physical layer transmission data stream is one of the following: a media access control protocol data unit MAC PDU, a transport block TB, a codeword CW, and a code block CB.

In a possible implementation, the second DU forbids enabling a MAC entity scheduling function specific to the terminal.

In a possible implementation, the transceiver unit 901 is further configured to receive physical layer transmission control information from the first DU, where the physical layer transmission control information includes one or more of the following: related parameter information of downlink control information DCI, related parameter information of the TB, CB or CW, parameter information of a modulation and coding scheme MCS, parameter information of transmit power control TPC, status parameter information of a transmission configuration indicator TCI, parameter information of a precoding matrix indication PMI, parameter information of an antenna port, related parameter information of a time-frequency location and a search space Searchspace that are of a physical downlink control channel PDCCH for the terminal in a control resource set CORESET, information about a data scrambling identifier of a physical downlink shared channel PDSCH, and information about a radio network temporary identifier RNTI.

In a possible implementation, the transceiver unit 901 is specifically configured to: determine, based on the related parameter information of the time-frequency location and the Searchspace that are of the PDCCH for the terminal in the CORESET in the physical layer transmission control information, the time-frequency location of the PDCCH corresponding to the terminal; determine a time-frequency location of the PDSCH based on the related parameter information of the DCI in the physical layer transmission control information; send, to the terminal through the PDCCH, DCI scrambled by using the RNTI, where the DCI indicates the PDSCH; and send, to the terminal through the PDSCH, the physical layer transmission data stream scrambled by using the data scrambling identifier of the PDSCH.

In a possible implementation, the transceiver unit 901 is further configured to receive uplink control information UCI from the terminal, where the UCI includes one or more of the following: a buffer status report BSR, a power headroom report PHR, a timing advance TA, and a measurement reference signal measurement result. The second DU sends the UCI to the first DU. In a possible implementation, the transceiver unit 901 is further configured to receive uplink feedback information from the terminal, where the uplink feedback information includes hybrid automatic repeat request HARQ receiving state feedback information. The second DU sends the uplink feedback information to the first DU.

In a possible implementation, the transceiver unit 901 is further configured to receive indication information from a CU, where the indication information includes an identifier of the terminal, and the indication information indicates the second DU and the first DU to perform inter-DU coordination transmission for the terminal.

It should be noted that in this embodiment, the communication apparatus may perform related steps of the first DU in the method embodiments shown in FIG. 11 to FIG. 13. For details, refer to the implementations provided in the foregoing steps. Details are not described herein again.

In another embodiment, the transceiver unit 901 is configured to: receive a random access message 1 Msg1 from a terminal, where the Msg1 is generated in response to indication information, and the indication information indicates the terminal to initiate contention-free random access to the second DU; and send the Msg1 to a first DU.

In a possible implementation, the indication information indicates a dedicated preamble used for the contention-free random access, and the Msg1 includes the dedicated preamble. Alternatively, the indication information indicates a dedicated random access resource used for the contention-free random access, and the transceiver unit 901 is specifically configured to receive the Msg1 from the terminal by using the dedicated random access resource. Alternatively, the indication information indicates a dedicated preamble and a dedicated random access resource, and the transceiver unit 901 is specifically configured to receive the Msg1 from the terminal by using the dedicated random access resource, where the Msg1 includes the dedicated preamble.

It should be noted that in this embodiment, the communication apparatus may perform related steps of the first DU in the method embodiment shown in FIG. 14. For details, refer to the implementations provided in the foregoing steps. Details are not described herein again.

In another embodiment, the transceiver unit 901 is configured to: receive a random access message 1 Msg1 from a terminal; send the Msg1 to a first DU; send a random access radio network temporary identifier RA-RNTI value of a secondary cell to the first DU, where there is a correspondence between the secondary cell and the second DU, and the RA-RNTI value is used to determine a time-frequency location of a first physical downlink control channel PDCCH for scheduling a random access message 2 Msg2, and a time-frequency location of a first physical downlink shared channel PDSCH for transmission of data information of the Msg2, and is used for data scrambling of the first PDCCH; receive a random access message 3 Msg3 from the terminal; and send the Msg3 to the first DU.

In a possible implementation, the processing unit 902 is specifically configured to determine, based on the RA-RNTI value, the time-frequency location of the first PDCCH and the time-frequency location of the first PDSCH. The transceiver unit 901 is further configured to: receive the Msg2 from the first DU; send first DCI to the terminal through the first PDCCH, where the first DCI is scrambled based on the RA-RNTI value, and the first DCI indicates the time-frequency location of the first PDSCH; and send the data information of the Msg2 to the terminal through the first PDSCH.

In a possible implementation, a response time window for monitoring the first PDCCH or the Msg2 is greater than 80 slots.

In a possible implementation, the transceiver unit 901 is further configured to: receive a random access message 4 Msg4 from the first DU, where a search space of a second PDCCH for scheduling the Msg4 is configured for the second DU, the second PDCCH is used for transmission of second downlink control information DCI for scheduling a second PDSCH, and the second PDSCH is used for transmission of data information of the Msg4; send the second DCI to the terminal through the second PDCCH, where the second DCI is scrambled based on a temporary cell radio network temporary identifier TC-RNTI, the TC-RNTI is included in the Msg2, and the second DCI indicates the second PDSCH; and send the data information of the Msg4 to the terminal through the second PDSCH.

In a possible implementation, maximum duration of a timer for monitoring the second PDCCH or the Msg4 is greater than duration of 64 subframes.

It should be noted that in this embodiment, the communication apparatus may perform related steps of the first DU in the method embodiment shown in FIG. 15. For details, refer to the implementations provided in the foregoing steps. Details are not described herein again.

In some embodiments, the communication apparatus 900 can correspondingly implement behavior and functions of the first node in the foregoing method embodiments. For example, the communication apparatus 900 may be the first node, or may be a component (for example, a chip or a circuit) used in the first node.

The transceiver unit 901 may be configured to support communication between the first node and another network entity, for example, support communication between the first node and the network device and the like shown in FIG. 16 to FIG. 29. The processing unit 902 is configured to control and manage an action of the first node. For example, the processing unit 902 is configured to support the first node in performing an operation other than receiving and sending of the first node in FIG. 16 to FIG. 29.

In an embodiment, the transceiver unit 901 is configured to receive a reconfiguration message from a network device, where the reconfiguration message is a radio resource control RRC reconfiguration message or an RRC connection reconfiguration message.

The processing unit 902 is configured to release a backhaul adaptation protocol BAP entity of the first node based on the reconfiguration message.

In a possible implementation, the reconfiguration message (a BAP configuration (bap-Config) field included in the reconfiguration message is set to release (release)) indicates to release a BAP configuration of the communication apparatus, and a unique successfully configured BAP configuration only exists on the communication apparatus.

In a possible implementation, the reconfiguration message (including an EN DC release and add (endc-ReleaseAndAdd) field) indicates the communication apparatus to perform a multi-RAT dual connectivity MR DC release process, where the communication apparatus is in an evolved universal terrestrial radio access E-UTRA standard and new radio NR standard dual connectivity (EN DC) mode. Before the backhaul adaptation protocol (backhaul adaptation protocol, BAP) entity of the communication apparatus is released based on the reconfiguration message, a BAP configuration associated with a secondary cell group SCG is already released.

In a possible implementation, the reconfiguration message (including an MR DC release and add mrdcReleaseAndAdd field) indicates the communication apparatus to perform a multi-RAT dual connectivity release (MR DC release) process, where the communication apparatus is in a new radio standard dual connectivity (NR DC) mode. Before the backhaul adaptation protocol (backhaul adaptation protocol, BAP) entity of the communication apparatus is released based on the reconfiguration message, a BAP configuration associated with a secondary cell group SCG is already released, where the BAP configuration is a last successfully configured BAP configuration that only exists on the communication apparatus.

In a possible implementation, the reconfiguration message (including an MR DC release and add (mrdc-ReleaseAndAdd) field) indicates an IAB node to perform a multi-RAT dual connectivity MR DC release process, where the IAB node is in an NR DC mode in an F 1 interface control plane and F1 interface user plane split scenario. In addition, a secondary node SN is an F1 interface terminating donor node of the IAB node, and a master node MN is a non-F1 interface terminating node of the IAB node, where the IAB node is in an NR DC mode. Before the backhaul adaptation protocol (backhaul adaptation protocol, BAP) entity of the communication apparatus is released based on the reconfiguration message, a BAP configuration associated with a secondary cell group SCG is already released, where the BAP configuration is a unique successfully configured BAP configuration that only exists on the IAB node.

In a possible implementation, the communication apparatus is an integrated access and backhaul (integrated access and backhaul, IAB) node or a mobile termination part of an IAB node (IAB-MT).

In a possible implementation, the network device may be an IAB donor base station, an NR standard base station gNB, or an LTE standard base station eNB. The NR standard base station gNB may be a master node MN in the NR DC mode, and the LTE standard base station eNB may be a master node eNB in the EN DC mode.

It should be noted that in this embodiment, the communication apparatus may perform related steps of the first node in the method embodiments shown in FIG. 26 to FIG. 29. For details, refer to the implementations provided in the foregoing steps. Details are not described herein again.

In another embodiment, the transceiver unit 901 is configured to receive a reconfiguration message from a network device, where the reconfiguration message (including an MR DC release and add (mrdc-ReleaseAndAdd) field) indicates the communication apparatus to perform a multi-RAT dual connectivity release (MR DC release) process, and the reconfiguration message is a radio resource control RRC reconfiguration message. The communication apparatus is in a new radio standard dual connectivity (NR DC) mode in an F1 interface control plane and F1 interface user plane non-split scenario, and a first backhaul adaptation protocol (backhaul adaptation protocol, BAP) configuration and a second BAP configuration exist on the communication apparatus, where the first BAP configuration is associated with a secondary cell group SCG, and the second BAP configuration is associated with a master cell group MCG.

The processing unit 902 is configured to: release the first BAP configuration based on the reconfiguration message; and forbid releasing a BAP entity of the communication apparatus.

In a possible implementation, the communication apparatus is an integrated access and backhaul (integrated access and backhaul, IAB) node or a mobile termination part of an IAB node IAB-MT. According to the foregoing method, the IAB node or the IAB-MT may release a BAP configuration of the IAB node or the IAB-MT based on indication information from the network device, and retain a BAP entity of the IAB node or the IAB-MT simultaneously.

In a possible implementation, the network device may be an IAB donor base station, an NR standard base station gNB, or an LTE standard base station eNB. The NR standard base station gNB may be a master node MN in the NR DC mode, and the LTE standard base station eNB may be a master node eNB in the EN DC mode.

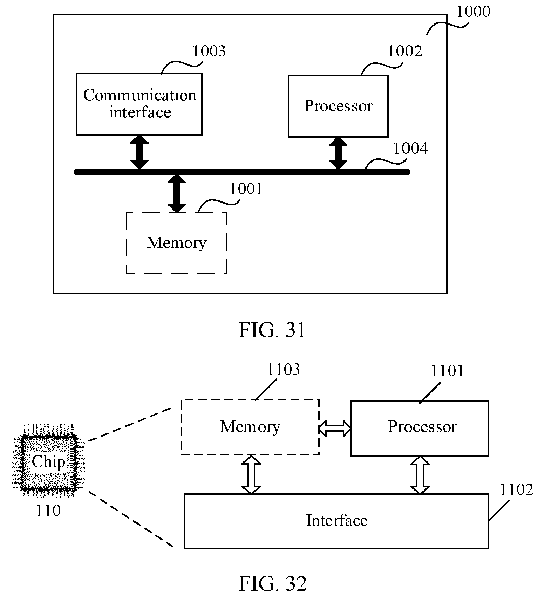

FIG. 31 is a diagram of a structure of a communication apparatus 1000 according to an embodiment of this application. The communication apparatus 1000 may be the CU, the first DU, the second DU, the terminal, the first node, or the network device, and can implement functions or steps of the CU, the first DU, the second DU, the terminal, the first node, or the network device in the methods provided in embodiments of this application. The communication apparatus 1000 may be a chip system. In embodiments of this application, the chip system may include a chip, or may include a chip and another discrete component.

The communication apparatus 1000 includes at least one processor 1002. The processor 1002 may be a CPU, a microprocessor, an ASIC, or one or more integrated circuits configured to control program execution of the solutions in this application, and is configured to implement or support the communication apparatus 1000 in implementing a function of a control plane network element, a terminal device, or an access network device of a private network, or a function of a mobility management network element of a public network in the methods provided in embodiments of this application. For details, refer to detailed descriptions in the method examples. Details are not described herein again.

The communication apparatus 1000 may further include at least one memory 1001, configured to store program instructions and/or data. The memory 1001 is coupled to the processor 1002. The coupling in embodiments of this application may be an indirect coupling or a communication connection between apparatus, units, or modules in an electrical form, a mechanical form, or another form, and is used for information exchange between the apparatus, the units, or the modules. The processor 1002 may cooperate with the memory 1001. The processor 1002 may execute the program instructions and/or the data stored in the memory 1001, so that the communication apparatus 1000 implements a corresponding method. At least one of the at least one memory may be included in the processor 1002.

The communication apparatus 1000 may further include a communication interface 1003, and is configured to communicate with another device or a communication network, for example, an Ethernet, a radio access network (radio access network, RAN), a wireless local area network (wireless local area network, WLAN), or a wired access network by using any apparatus like a transceiver. The communication interface 1003 is configured to communicate with another device through a transmission medium, so that an apparatus in the communication apparatus 1000 can communicate with the another device. For example, when the communication apparatus 1000 is a private network element, the another device is a public network element, a private user plane network element, an access network device, or a terminal device. Alternatively, when the communication apparatus is a public network element, the another device is a private network element (a private session management network element or a private authentication network element), a private user plane network element, an access network device, or a terminal device. The processor 1002 may receive and send data through the communication interface 1003. The communication interface 1003 may be specifically a transceiver.

A specific connection medium between the communication interface 1003, the processor 1002, and the memory 1001 is not limited in this embodiment of this application. In this embodiment of this application, in FIG. 31, the memory 1001, the processor 1002, and the communication interface 1003 are connected to each other through a bus 1004. The bus is represented by a bold line in FIG. 31. A connection manner between other components is merely an example for description, and imposes no limitation. The bus may be classified into an address bus, a data bus, a control bus, and the like. For ease of illustration, only one bold line is used in FIG. 31 to represent the bus, which, however, does not mean that there is only one bus or only one type of bus.

In this embodiment of this application, the processor 1002 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware and software units in the processor.

The memory 1001 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in an instruction form or a data structure form and that can be accessed by a computer. However, the memory 1001 is not limited thereto. The memory may exist independently, and is connected to the processor through the bus 1004. The memory may alternatively be integrated with the processor.

The memory 1001 is configured to store computer-executable instructions for performing the solutions in this application, and the processor 1002 controls the execution. The processor 1002 is configured to execute the computer-executable instructions stored in the memory 1001, to implement the method for isolating the public network service from the private network service provided in the foregoing embodiment of this application.

Optionally, the computer-executable instructions in this embodiment of this application may also be referred to as application program code. This is not specifically limited in this embodiment of this application.

For a case in which the communication apparatus may be a chip or a chip system, refer to a diagram of a structure of a chip shown in FIG. 32. A chip 110 shown in FIG. 32 includes a processor 1101 and an interface 1102. There may be one or more processors 1101, and there may be a plurality of interfaces 1102.

For a case in which the chip is configured to implement a function of the first DU in embodiments of this application:
In an embodiment, the processor 1101 is configured to receive data of a terminal from a central unit CU through the interface 1102.

The processor 1101 is configured to process the data by using a media access control MAC entity scheduling function specific to the terminal, to obtain a physical layer transmission data stream. The processor 1101 is configured to send the physical layer transmission data stream to a second DU through the interface 1102.

In another embodiment, the processor 1101 is configured to perform the following operations through the interface 1102: receiving indication information from a central unit CU, where the indication information indicates a terminal to initiate contention-free random access to a second DU; sending the indication information to the terminal; and receiving a random access message 1 Msg1 from the second DU.

The processor 1101 is configured to generate a random access message 2 Msg2 based on the Msg1. The processor 1101 is further configured to send the Msg2 to the terminal through the interface 1102.

In another embodiment, the processor 1101 is configured to receive a random access message 1 Msg1 from a second DU through the interface 1102.

The processor 1101 is configured to generate a random access message 2 Msg2 based on the Msg1. The processor 1101 is further configured to perform the following operations through the interface 1102: sending the Msg2 to a terminal; receiving a random access message 3 Msg3 from the second DU; sending the Msg3 to a central unit CU; receiving a Msg4 from the CU; and sending the Msg4 to the terminal.

For a case in which the chip is configured to implement a function of the second DU in embodiments of this application:
In an embodiment, the processor 1101 is configured to: receive a physical layer transmission data stream from a first DU through the interface 1102; and send the physical layer transmission data stream to a terminal.

In another embodiment, the processor 1101 is configured to perform the following operations through the interface 1102: receiving a random access message 1 Msg1 from a terminal, where the Msg1 is generated in response to indication information, and the indication information indicates the terminal to initiate contention-free random access to the second DU; and sending the Msg1 to a first DU.

In another embodiment, the processor 1101 is configured to perform the following operations through the interface 1102: receiving a random access message 1 Msg1 from a terminal; sending the Msg1 to a first DU; sending a random access radio network temporary identifier RA-RNTI value of a secondary cell to the first DU, where there is a correspondence between the secondary cell and the second DU, and the RA-RNTI value is used to determine a time-frequency location of a first physical downlink control channel PDCCH for scheduling a random access message 2 Msg2, and a time-frequency location of a first physical downlink shared channel PDSCH for transmission of data information of the Msg2, and is used for data scrambling of the first PDCCH; receiving a random access message 3 Msg3 from the terminal; and sending the Msg3 to the first DU.

For a case in which the chip is configured to implement a function of the first node in embodiments of this application:
In an embodiment, the processor 1101 is configured to receive a reconfiguration message from a network device through the interface 1102, where the reconfiguration message is a radio resource control RRC reconfiguration message or an RRC connection reconfiguration message.

The processor 1101 is configured to release a backhaul adaptation protocol BAP entity of the first node based on the reconfiguration message.

In another embodiment, the processor 1101 is configured to receive a reconfiguration message from a network device through the interface 1102, where the reconfiguration message (including an MR DC release and add (mrdc-ReleaseAndAdd) field) indicates the chip to perform a multi-RAT dual connectivity release (MR DC release) process, and the reconfiguration message is a radio resource control RRC reconfiguration message. The chip is in a new radio standard dual connectivity (NR DC) mode in an F1 interface control plane and F1 interface user plane non-split scenario, and a first backhaul adaptation protocol (backhaul adaptation protocol, BAP) configuration and a second BAP configuration exist on the chip, where the first BAP configuration is associated with a secondary cell group SCG, and the second BAP configuration is associated with a master cell group MCG.

The processor 1101 is configured to: release the first BAP configuration based on the reconfiguration message; and forbid releasing a BAP entity of the chip.

Optionally, the chip further includes a memory 1103, and the memory 1103 is configured to store necessary program instructions and necessary data.

An embodiment of this application further provides a communication system. Specifically, the communication system includes a first DU and a second DU. For example, the communication system includes the first DU and the second DU that are configured to implement the related functions in FIG. 11 to FIG. 15.

An embodiment of this application further provides a computer-readable storage medium, including instructions. When the instructions are run on a computer, the computer is enabled to perform the method performed by the first DU, the second DU, or the first node in FIG. 11 to FIG. 15 and FIG. 26 to FIG. 29.

An embodiment of this application further provides a computer program product, including instructions. When the instructions are run on a computer, the computer is enabled to perform the method performed by the first DU, the second DU, or the first node in FIG. 11 to FIG. 15 and FIG. 26 to FIG. 29.

An embodiment of this application provides a chip system. The chip system includes a processor, may further include a memory, and is configured to implement a function of the first DU, the second DU, or the first node in the foregoing method. The chip system may include a chip, or may include a chip and another discrete component.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or transmission of the computer instructions may be performed from a computer-readable storage medium to another computer-readable storage medium. For example, the transmission of the computer instructions may be performed from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid state disk, SSD)), or the like.

A person of ordinary skill in the art may understand that various numerical numbers such as the first and the second in this specification are merely distinguished for ease of description, and are not intended to limit the scope and sequence of embodiments of this application.

"Predefine" in this application may be understood as "define", "predefine", "store", "pre-store", "pre-negotiate", "preconfigure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. An inter-distributed-unit DU communication method, wherein the method comprises:
receiving, by a first DU, data of a terminal from a central unit CU; and processing, by the first DU, the data by using a media access control MAC entity scheduling function specific to the terminal, to obtain a physical layer transmission data stream; and
sending, by the first DU, the physical layer transmission data stream to a second DU.

2. The method according to claim 1, wherein the physical layer transmission data stream is a media access control protocol data unit MAC PDU.

3. The method according to claim 1, wherein the processing, by the first DU, the data by using a media access control MAC entity scheduling function specific to the terminal, to obtain a physical layer transmission data stream comprises:
processing, by the first DU, the data by using the media access control MAC entity scheduling function and a physical layer scheduling function specific to the terminal, to obtain the physical layer transmission data stream, wherein
the physical layer transmission data stream is one of the following: a transport block TB, a codeword CW, and a code block CB.

4. The method according to any one of claims 1 to 3, wherein the method further comprises:
sending, by the first DU, physical layer transmission control information to the second DU, wherein
the physical layer transmission control information comprises one or more of the following:
related parameter information of downlink control information DCI, related parameter information of the TB, CB or CW, parameter information of a modulation and coding scheme MCS, parameter information of transmit power control TPC, status parameter information of a transmission configuration indicator TCI, parameter information of a precoding matrix indication PMI, parameter information of an antenna port, related parameter information of a time-frequency location and a search space Searchspace that are of a physical downlink control channel PDCCH for the terminal in a control resource set CORESET, information about a data scrambling identifier of a physical downlink shared channel PDSCH, and information about a radio network temporary identifier RNTI.

5. The method according to any one of claims 1 to 4, wherein the method further comprises:
receiving, by the first DU, uplink control information UCI from the second DU, wherein the UCI comprises one or more of the following: a buffer status report BSR, a power headroom report PHR, a timing advance TA, and a measurement reference signal measurement result.

6. The method according to any one of claims 1 to 5, wherein the method further comprises:
receiving, by the first DU, uplink feedback information from the second DU, wherein the uplink feedback information comprises hybrid automatic repeat request HARQ receiving state feedback information.

7. The method according to any one of claims 1 to 6, wherein the method further comprises:
receiving, by the first DU, indication information from the CU, wherein the indication information comprises an identifier of the terminal, and the indication information indicates the first DU and the second DU to perform inter-DU coordination transmission for the terminal.

8. An inter-distributed-unit DU communication method, wherein the method comprises:
receiving, by a second DU, a physical layer transmission data stream from a first DU; and
sending, by the second DU, the physical layer transmission data stream to a terminal.

9. The method according to claim 8, wherein the physical layer transmission data stream is one of the following: a media access control protocol data unit MAC PDU, a transport block TB, a codeword CW, and a code block CB.

10. The method according to claim 8 or 9, wherein the second DU forbids enabling a MAC entity scheduling function specific to the terminal.

11. The method according to any one of claims 8 to 10, wherein the method further comprises:
receiving, by the second DU, physical layer transmission control information from the first DU, wherein
the physical layer transmission control information comprises one or more of the following:
related parameter information of downlink control information DCI, related parameter information of the TB, CB or CW, parameter information of a modulation and coding scheme MCS, parameter information of transmit power control TPC, status parameter information of a transmission configuration indicator TCI, parameter information of a precoding matrix indication PMI, parameter information of an antenna port, related parameter information of a time-frequency location and a search space Searchspace that are of a physical downlink control channel PDCCH for the terminal in a control resource set CORESET, information about a data scrambling identifier of a physical downlink shared channel PDSCH, and information about a radio network temporary identifier RNTI.

12. The method according to claim 11, wherein the sending, by the second DU, the physical layer transmission data stream to a terminal comprises:
determining, by the second DU based on the related parameter information of the time-frequency location and the Searchspace that are of the PDCCH for the terminal in the CORESET in the physical layer transmission control information, the time-frequency location of the PDCCH corresponding to the terminal;
determining, by the second DU, a time-frequency location of the PDSCH based on the related parameter information of the DCI in the physical layer transmission control information;
sending, by the second DU to the terminal through the PDCCH, RNTI-scrambled DCI scrambled by using the RNTI, wherein the DCI indicates the PDSCH; and
sending, by the second DU to the terminal through the PDSCH, the physical layer transmission data stream scrambled by using the data scrambling identifier of the PDSCH.

13. The method according to any one of claims 8 to 12, wherein the method further comprises:
receiving, by the second DU, uplink control information UCI from the terminal, wherein the UCI comprises one or more of the following: a buffer status report BSR, a power headroom report PHR, a timing advance TA, and a measurement reference signal measurement result; and
sending, by the second DU, the UCI to the first DU.

14. The method according to any one of claims 8 to 13, wherein the method further comprises:
receiving, by the second DU, uplink feedback information from the terminal, wherein the uplink feedback information comprises hybrid automatic repeat request HARQ receiving state feedback information; and
sending, by the second DU, the uplink feedback information to the first DU.

15. The method according to any one of claims 8 to 14, wherein the method further comprises:
receiving, by the second DU, indication information from a CU, wherein the indication information comprises an identifier of the terminal, and the indication information indicates the second DU and the first DU to perform inter-DU coordination transmission for the terminal.

16. An inter-distributed-unit DU communication method, wherein the method comprises:
receiving, by a first DU, indication information from a central unit CU, wherein the indication information indicates a terminal to initiate contention-free random access to a second DU;
sending, by the first DU, the indication information to the terminal;
receiving, by the first DU, a random access message 1 Msg1 from the second DU;
generating, by the first DU, a random access message 2 Msg2 based on the Msg1; and
sending, by the first DU, the Msg2 to the terminal.

17. The method according to claim 16, wherein the indication information indicates a dedicated preamble used for the contention-free random access, and the Msg1 comprises the dedicated preamble;
the indication information indicates a dedicated random access resource used for the contention-free random access, and the receiving, by the first DU, a Msg1 from the second DU comprises: receiving, by the first DU, the Msg1 from the second DU by using the dedicated random access resource; or
the indication information indicates a dedicated preamble and a dedicated random access resource, and the receiving, by the first DU, a Msg1 from the second DU comprises: receiving, by the first DU, the Msg1 from the second DU by using the dedicated random access resource, wherein the Msg1 comprises the dedicated preamble.

18. An inter-distributed-unit DU communication method, wherein the method comprises:
receiving, by a second DU, a random access message 1 Msg1 from a terminal, wherein the Msg1 is generated in response to indication information, and the indication information indicates the terminal to initiate contention-free random access to the second DU; and
sending, by the second DU, the Msg1 to a first DU.

19. The method according to claim 18, wherein the indication information indicates a dedicated preamble used for the contention-free random access, and the Msg1 comprises the dedicated preamble;
the indication information indicates a dedicated random access resource used for the contention-free random access, and the receiving, by a second DU, a Msg1 from a terminal comprises: receiving, by the second DU, the Msg1 from the terminal by using the dedicated random access resource; or
the indication information indicates a dedicated preamble and a dedicated random access resource, and the receiving, by a second DU, a Msg1 from a terminal comprises: receiving, by the second DU, the Msg1 from the terminal by using the dedicated random access resource, wherein the Msg1 comprises the dedicated preamble.

20. An inter-distributed-unit DU communication method, wherein the method comprises:
receiving, by a first DU, a random access message 1 Msg1 from a second DU;
generating, by the first DU, a random access message 2 Msg2 based on the Msg1;
sending, by the first DU, the Msg2 to a terminal;
receiving, by the first DU, a random access message 3 Msg3 from the second DU;
sending, by the first DU, the Msg3 to a central unit CU;
receiving, by the first DU, a Msg4 from the CU; and
sending, by the first DU, the Msg4 to the terminal.

21. The method according to claim 20, wherein the method further comprises:
receiving, by the first DU from the second DU, a random access radio network temporary identifier RA-RNTI value of a secondary cell, wherein there is a correspondence between the secondary cell and the second DU; and
the RA-RNTI value is used to determine a time-frequency location of a first physical downlink control channel PDCCH for scheduling the Msg2, and a time-frequency location of a first physical downlink shared channel PDSCH for transmission of data information of the Msg2, and is used for data scrambling of the first PDCCH.

22. The method according to claim 21, wherein a response time window for monitoring the first PDCCH or a random access response is greater than 80 slots.

23. The method according to any one of claims 20 to 22, wherein the sending, by the first DU, the Msg2 to a terminal comprises:
sending, by the first DU, the Msg2 to the terminal via the second DU.

24. The method according to any one of claims 20 to 23, wherein the sending, by the first DU, the Msg4 to the terminal comprises:
sending, by the first DU, the Msg4 to the terminal via the second DU.

25. The method according to claim 24, wherein maximum duration of a timer for monitoring the Msg4 is greater than duration of 64 subframes.

26. An inter-distributed-unit DU communication method, wherein the method comprises:
receiving, by a second DU, a random access message 1 Msg1 from a terminal;
sending, by the second DU, the Msg1 to a first DU;
sending, by the second DU, a random access radio network temporary identifier RA-RNTI value of a secondary cell to the first DU, wherein there is a correspondence between the secondary cell and the second DU; and the RA-RNTI value is used to determine a time-frequency location of a first physical downlink control channel PDCCH for scheduling a random access message 2 Msg2, and a time-frequency location of a first physical downlink shared channel PDSCH for transmission of data information of the Msg2, and is used for data scrambling of the first PDCCH;
receiving, by the second DU, a random access message 3 Msg3 from the terminal; and
sending, by the second DU, the Msg3 to the first DU.

27. The method according to claim 26, wherein the method further comprises:
determining, by the second DU based on the RA-RNTI value, the time-frequency location of the first PDCCH and the time-frequency location of the first PDSCH;
receiving, by the second DU, the Msg2 from the first DU;
sending, by the second DU, first DCI to the terminal through the first PDCCH, wherein the first DCI is scrambled based on the RA-RNTI value, and the first DCI indicates the time-frequency location of the first PDSCH; and
sending, by the second DU, the data information of the Msg2 to the terminal through the first PDSCH.

28. The method according to claim 26 or 27, wherein a response time window for monitoring the first PDCCH or the Msg2 is greater than 80 slots.

29. The method according to any one of claims 26 to 28, wherein the method further comprises:
receiving, by the second DU, a random access message 4 Msg4 from the first DU, wherein a search space of a second PDCCH for scheduling the Msg4 is configured for the second DU, the second PDCCH is used for transmission of second downlink control information DCI for scheduling a second PDSCH, and the second PDSCH is used for transmission of data information of the Msg4;
sending, by the second DU, the second DCI to the terminal through the second PDCCH, wherein the second DCI is scrambled based on a temporary cell radio network temporary identifier TC-RNTI, the TC-RNTI is comprised in the Msg2, and the second DCI indicates the second PDSCH; and
sending, by the second DU, the data information of the Msg4 to the terminal through the second PDSCH.

30. The method according to claim 29, wherein maximum duration of a timer for monitoring the second PDCCH or the Msg4 is greater than duration of 64 subframes.

31. A communication method, wherein the method comprises:
receiving, by a first node, a reconfiguration message from a network device, wherein the reconfiguration message is a radio resource control RRC reconfiguration message or an RRC connection reconfiguration message; and
releasing, by the first node, a backhaul adaptation protocol BAP entity of the first node based on the reconfiguration message.

32. The method according to claim 31, wherein a unique successfully configured BAP configuration only exists on the first node; and
the reconfiguration message indicates to release the BAP configuration of the first node.

33. The method according to claim 31 or 32, wherein the first node is in an evolved universal terrestrial radio access E-UTRA standard and new radio NR standard dual connectivity EN DC mode, and the reconfiguration message indicates the first node to perform a multi-RAT dual connectivity MR DC release process; and
before the releasing, by the first node, a BAP entity of the first node based on the reconfiguration message, the method further comprises:
releasing, by the first node, a BAP configuration associated with a secondary cell group SCG.

34. The method according to claim 31, wherein the first node is in a new radio standard dual connectivity NR DC mode, and the reconfiguration message indicates the first node to perform an MR DC release process; and
before the releasing, by the first node, a BAP entity of the first node based on the reconfiguration message, the method further comprises:
releasing, by the first node, a BAP configuration associated with an SCG, wherein the BAP configuration associated with the SCG is a last successfully configured BAP configuration that only exists on the first node.

35. The method according to claim 31, wherein the first node is in an NR DC mode in an F1 interface control plane and F1 interface user plane split scenario; a secondary node SN is an F1 interface terminating donor node of the first node, a master node MN is a non-F1 interface terminating node of the first node, and the first node is in an NR DC mode; and the reconfiguration message indicates the first node to perform an MR DC release process; and
before the releasing, by the first node, a BAP entity of the first node based on the reconfiguration message, the method further comprises:
releasing, by the first node, a BAP configuration associated with an SCG, wherein the BAP configuration associated with the SCG is a unique successfully configured BAP configuration that only exists on the first node.

36. The method according to any one of claims 31 to 35, wherein the first node is an integrated access and backhaul IAB node, or is a mobile termination part of an IAB node IAB-MT.

37. A communication apparatus, wherein the communication apparatus comprises a unit configured to perform the method according to any one of claims 1 to 36.

38. A communication apparatus, comprising a processor and a communication interface, wherein
the communication interface is configured to: receive a signal from another communication apparatus other than the communication apparatus and perform transmission of the signal to the processor, or send a signal from the processor to another communication apparatus other than the communication apparatus; and
the processor is configured to implement the method according to any one of claims 1 to 36 through a logic circuit or by executing code instructions.

39. A computer-readable storage medium, wherein the computer-readable storage medium is configured to store instructions, and when the instructions are executed, the method according to any one of claims 1 to 36 is implemented.
